(19) Europäisches Patentamt
European Patent Office
Office européen des brevets

(11) **EP 4 456 570 A1**

(12) **EUROPEAN PATENT APPLICATION**
published in accordance with Art. 153(4) EPC

(43) Date of publication:
**30.10.2024 Bulletin 2024/44**

(21) Application number: **22910066.4**

(22) Date of filing: **21.12.2022**

(51) International Patent Classification (IPC):
**H04W 4/02** $^{(2018.01)}$

(52) Cooperative Patent Classification (CPC):
**H04W 4/02**

(86) International application number:
**PCT/CN2022/140653**

(87) International publication number:
**WO 2023/116754 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 CN 202111600044**

(71) Applicant: **Vivo Mobile Communication Co., Ltd.
Dongguan, Guangdong 523863 (CN)**

(72) Inventors:
• **LI, Jianzhi
Dongguan, Guangdong 523863 (CN)**
• **YUAN, Yannan
Dongguan, Guangdong 523863 (CN)**
• **JIANG, Dajie
Dongguan, Guangdong 523863 (CN)**
• **YAO, Jian
Dongguan, Guangdong 523863 (CN)**
• **DING, Shengli
Dongguan, Guangdong 523863 (CN)**
• **WU, Jianming
Dongguan, Guangdong 523863 (CN)**

(74) Representative: **Conti, Marco
Bugnion S.p.A.
Via di Corticella, 87
40128 Bologna (IT)**

(54) **TARGET POSITIONING SENSING METHOD AND APPARATUS, COMMUNICATION DEVICE, AND STORAGE MEDIUM**

(57) This application provides a target positioning sensing method and apparatus, a communication device, and a storage medium. The target positioning sensing method includes: performing, by a first device, sensing measurement on a sensing target, to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and sending, by the first device, the first measurement quantity result, where the first measurement quantity result is used for determining a positioning sensing result of the sensing target.

```
                    ┌──────────────┐
                    │    Start     │
                    └──────┬───────┘
                           │
  ┌────────────────────────▼───────────────────────────┐
  │ A first device performs sensing measurement on a    │   201
  │ sensing target, to obtain a first measurement       │
  │ quantity result of a first measurement quantity of  │
  │ a dynamic reflection path of a first signal         │
  └────────────────────────┬───────────────────────────┘
                           │
  ┌────────────────────────▼───────────────────────────┐
  │ The first device sends the first measurement        │   202
  │ quantity result, where the first measurement        │
  │ quantity result is used for determining a           │
  │ positioning sensing result of the sensing target    │
  └────────────────────────┬───────────────────────────┘
                           │
                    ┌──────▼───────┐
                    │     End      │
                    └──────────────┘
```

FIG. 2

**Description**

**CROSS-REFERENCE TO RELATED APPLICATIONS**

This application claims priority to Chinese Patent Application No. 202111600044.4 filed on December 24, 2021, which is incorporated herein by reference in its entirety.

**TECHNICAL FIELD**

This application relates to the field of communication technologies, and specifically, to a target positioning sensing method and apparatus, a communication device, and a storage medium.

**BACKGROUND**

Main positioning technologies currently used in communication systems are new radio (New Radio, NR) positioning technology and LONG TERM EVOLUTION (Long Term Evolution, LTE) positioning technology. These positioning technologies can only locate devices that use these positioning technologies. For example, a terminal can determine a location of only the terminal through NR positioning technology. In this way, because only the device using the positioning technology can be located, the communication system has poor positioning capabilities.

**SUMMARY**

Embodiments of this application provide a target positioning sensing method and apparatus, a communication device, and a storage medium, which can solve a problem of poor positioning capabilities of a communication system.
According to a first aspect, a target positioning sensing method is provided, including:

performing, by a first device, sensing measurement on a sensing target, to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and
sending, by the first device, the first measurement quantity result, where the first measurement quantity result is used for determining a positioning sensing result of the sensing target.

According to a second aspect, a target positioning sensing method is provided, including:

receiving, by a third device, first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and
determining, by the third device, a positioning sensing result of the sensing target based on the first measurement quantity results sent by the at least two first devices.

According to a third aspect, a target positioning sensing apparatus is provided, including:

a first measurement module, configured to perform sensing measurement on a sensing target, to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to a first device; and
a first sending module, configured to send the first measurement quantity result, where the first measurement quantity result is used for determining a positioning sensing result of the sensing target.

According to a fourth aspect, a target positioning sensing apparatus is provided, including:

a receiving module, configured to receive first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and

a determining module, configured to determine a positioning sensing result of the sensing target based on the first measurement quantity results sent by the at least two first devices.

According to a fifth aspect, a communication device is provided, including a processor and a memory, where the memory stores a program or instructions executable on the processor, and the program or the instructions, when executed by the processor, implement the steps of the target positioning sensing method on the first device side according to embodiments of this application.

According to a sixth aspect, a communication device is provided, including a processor and a communication interface, where the communication interface is configured to perform sensing measurement on a sensing target to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and send the first measurement quantity result, where the first measurement quantity result is used for determining a positioning sensing result of the sensing target.

According to a seventh aspect, a communication device is provided, including a processor and a memory, where the memory stores a program or instructions executable on the processor, and the program or the instructions, when executed by the processor, implement the steps of the target positioning sensing method on the third device side according to embodiments of this application.

According to an eighth aspect, a communication device is provided, including a processor and a communication interface, where the communication interface is configured to receive first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and the processor or the communication interface is configured to determine a positioning sensing result of the sensing target based on the first measurement quantity results sent by the at least two first devices.

According to a ninth aspect, a communication system is provided, including: a first device and a third device. The first device may be configured to perform the steps of the target positioning sensing method according to the first aspect. The third device may be configured to perform the steps of the target positioning sensing method according to the second aspect.

According to a tenth aspect, a readable storage medium is provided, where the readable storage medium stores a program or instructions, and the program or the instructions, when executed by a processor, implement the steps of the target positioning sensing method on the first device side according to embodiments of this application, or implement the steps of the target positioning sensing method on the third device side according to embodiments of this application.

According to an eleventh aspect, a chip is provided, including a processor and a communication interface, where the communication interface and the processor are coupled, and the processor is configured to run a program or instructions to implement the target positioning sensing method on the first device side, or implement the target positioning sensing method on the third device side.

According to a twelfth aspect, a computer program product is provided, stored in a storage medium, where the computer program product is executed by at least one processor to implement the steps of the target positioning sensing method on the first device side, or the computer program product is executed by at least one processor to implement the steps of the target positioning sensing method on the third device side.

In embodiments of this application, the first device performs sensing measurement on a sensing target to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and the first device sends the first measurement quantity result, where the first measurement quantity result is used for determining a positioning sensing result of the sensing target. In this way, by using the first measurement quantity result sent by the first device, sensing positioning of the sensing target can be implemented, thereby improving positioning capabilities of the communication system.

**BRIEF DESCRIPTION OF THE DRAWINGS**

FIG. 1 is a block diagram of a wireless communication system to which an embodiment of this application can be applied;

FIG. 2 is a flowchart of a target positioning sensing method according to an embodiment of this application;

FIG. 3 is a flowchart of another target positioning sensing method according to an embodiment of this application;

FIG. 4 is a schematic diagram of determining an initial location of a sensing target according to an embodiment of this application;

FIG. 5 is a schematic diagram of sensing area division according to an embodiment of this application;

FIG. 6 is a schematic diagram of sensing target measurement according to an embodiment of this application;

FIG. 7 is a schematic diagram of sensing target positioning according to an embodiment of this application;

FIG. 8 is a flowchart of another target positioning sensing method according to an embodiment of this application;

FIG. 9 is a structural diagram of a target positioning sensing apparatus according to an embodiment of this application;

FIG. 10 is a structural diagram of another target positioning sensing apparatus according to an embodiment of this application;

FIG. 11 is a structural diagram of a communication device according to an embodiment of this application;

FIG. 12 is a structural diagram of a communication device according to an embodiment of this application; and

FIG. 13 is a block diagram of a communication device according to an embodiment of this application.

## DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish similar objects, but are not used to describe a specific sequence or order. It is to be understood that the terms so used are interchangeable under appropriate circumstances such that embodiments of this application are capable of being practiced in other sequences than those illustrated or described herein, and that the objects distinguished by "first" and "second" are generally a class and do not limit the number of objects, e.g., the first object may be one or more. In addition, "and/or" in the description and claims represents at least one of connected objects, and the character "/" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6th generation (6th Generation, 6G) communication system.

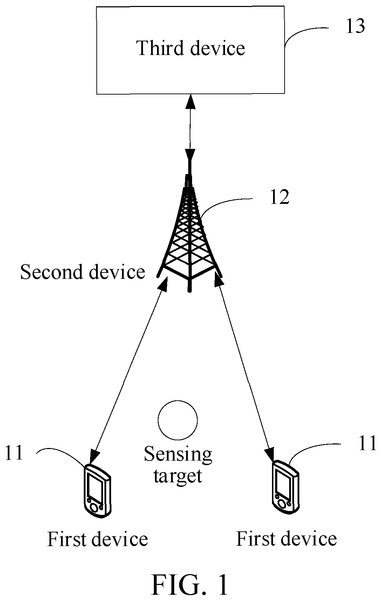

FIG. 1 is a block diagram of a wireless communication system to which an embodiment of this application can be applied. The wireless communication system includes at least two first devices 11, a second device 12, and a third device 13.

The first device 11 may be configured to perform sensing measurement, and in particular may perform sensing measurement on a signal (for example, a dedicated sensing signal, an integrated sensing and communication signal, or an LTE or NR reference signal) sent by the second device 12 and send a measured measurement quantity result to the third device.

The second device 12 may be configured to send a signal (for example, a dedicated sensing signal, an integrated sensing and communication signal, or an LTE or NR reference signal) such that the first device 11 performs sensing measurement and the second device 12 may not perform measurement.

The third device 13 may be configured to determine a positioning sensing result of a sensing target according to measurement quantity results sent by the at least two first devices 11.

FIG. 1 is described by using an example in which the first device is a terminal, the second device is a base station, and the third device is a core network device.

In this embodiment, the first device 11 may be a terminal, a network side device, or a dedicated sensing device, the second device 12 may be a terminal, a network side device, or a dedicated sensing device, and the third device 13 may be a terminal, a network side device, a dedicated sensing device, a third party service, or the like.

In this embodiment of this application, the terminal may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home equipment with wireless communication functions, such as a refrigerator, a TV, a washing machine, or furniture), a game console, a personal computer (personal computer, PC), a teller machine, or a self-service machine. The wearable device includes: a smart watch, a smart band, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in embodiments of this application, a specific type of the terminal is not limited.

The network side device may include an access network device or a core network device, where the access network device may also be referred to as a radio access network device, a radio access network (Radio Access Network, RAN), a radio access network function, or a radio access network unit. The access network device may include a base station, a small base station, a wireless local area network (Wireless Local Area Network, WLAN) access point, a Wireless Fidelity (Wireless Fidelity, WiFi) node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a Home Node B, a Home evolved Node B, a transmitting receiving point (Transmitting Receiving Point, TRP), or another suitable term in the field. As long as the same technical effect is achieved, the base station is not limited to a specific technical vocabulary. It should be noted that, only a base station in an NR system is used as an example in embodiments of this application, and the specific type of the base station is not limited. The core network device may include, but is not limited to, at least one of a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function. PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), local NEF (Local NEF, or L-NEF), a binding support function (Binding Support Function, BSF), an application function (Application Function, AF), and the like. It should be noted that this embodiment of this application is described only by taking a core network device in an NR system as an example, and a specific type of the core network device is not limited.

A target positioning sensing method and apparatus, a communication device, and a storage medium according to embodiments of this application are described in detail below by using some embodiments and application scenarios thereof with reference to the accompanying drawings.

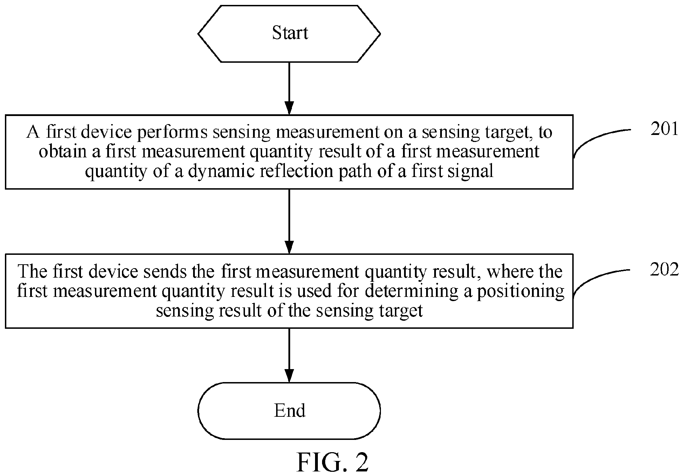

Refer to FIG. 2. FIG. 2 is a flowchart of a target positioning sensing method according to an embodiment of this application. As shown in FIG. 2, the method includes the following steps:

Step 201: A first device performs sensing measurement on a sensing target, to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device.

The first device may be a terminal, a network side device, or a dedicated sensing device.

In an implementation, the first device includes: a terminal, a network side device, or a dedicated sensing device for performing sensing measurement.

The second device may be a terminal, a network side device, or a dedicated sensing device.

In an implementation, the second device includes a terminal, a network side device, or a dedicated sensing device for sending the first signal.

The sensing target may be a target object such as a terminal, a vehicle, a person, or an animal.

The sensing measurement may be to measure the first measurement quantity of the dynamic reflection path of the first signal to obtain the first measurement quantity result.

The dynamic reflection path may be a dynamic reflection path caused by the sensing target for a wireless channel from the second device to the first device. The dynamic reflection path may specifically be a multipath signal from the first signal being reflected by the sensing target and received by the first device.

The first measurement quantity result may include at least one of a reflection path Doppler frequency or a reflection path length change speed. The reflection path Doppler frequency may represent a length change speed of the sensing target. For example, because the sensing target is in motion, the Doppler frequency is introduced into the wireless channel from the second device to the first device, and the length of the reflection path of the sensing target is to change. The length change speed is the Doppler frequency of the reflection path in propagation directions (incident and emitting directions relative to the human body) thereof.

In an implementation, the first signal includes one of:

a dedicated sensing signal, an integrated sensing and communication signal, or an LTE or NR reference signal.

The dedicated sensing signal may be a signal dedicated for sensing measurement of a target, the integrated sensing and communication signal may be understood as an integrated sensing and communication (Integrated Sensing and Communication, ISAC) signal, and the LTE or NR reference signal may be a reference signal such as a positioning reference signal (Positioning Reference Signal, PRS) or a sounding reference signal (Sounding Reference Signal, SRS).

In addition, the first signal may be a signal sent by a terminal to another terminal, may be a signal sent by a network side device to a terminal, or may be a signal sent by a terminal to a network side device.

Step 202: The first device sends the first measurement quantity result, where the first measurement quantity result is used for determining a positioning sensing result of the sensing target.

That the first device sends the first measurement quantity result may be that the first device directly reports the first measurement quantity result to the third device, or that the first device reports the first measurement quantity result to the third device through the second device, or that one first device reports the first measurement quantity result to the third device through the other first device.

That the first measurement quantity result is used for determining a positioning sensing result of the sensing target may be that after the third device receives the first measurement quantity result, the positioning sensing result of the sensing target may be determined based on the first measurement quantity result.

In an implementation, the third device may determine the positioning sensing result of the sensing target based on first measurement quantity results reported by at least two first devices. Specifically, according to the first measurement quantity result reported by each first device, a dynamic reflection path of the sensing target to the first device may be determined, so that intersections between dynamic reflection paths corresponding to at least two first devices can be determined, and then a location of the sensing target can be determined based on such intersections. For example, an intersection between dynamic reflection paths corresponding to two first devices is a current location of the sensing target.

In this embodiment of this application, the first measurement quantity result sent by the first device can be used to implement the sensing positioning on the sensing target, thereby improving positioning capabilities of the communication system. For example, a location of a target such as another terminal, a pedestrian, or a vehicle can be determined by the first device.

In an optional implementation, the positioning sensing result includes at least one of:

a speed of the sensing target;
a speed direction of the sensing target;
a trajectory of the sensing target; or
a future predicted location of the sensing target.

The speed of the sensing target may be determined based on the reflection path Doppler frequency or the reflection path length change speed in the at least two first measurement quantity results and locations of the first device and the second device.

The speed direction of the sensing target may be determined based on the reflection path Doppler frequency or the reflection path length change speed in the at least two first measurement quantity results and locations of the first device and the second device.

The trajectory of the sensing target may be determined based on locations of the sensing target at a plurality of measurement moments, where the locations of the sensing target are determined based on the reflection path Doppler frequency or the reflection path length change speed in the at least two first measurement quantity results.

The future predicted location of the sensing target may be a location predicted at next one or more moments according to a current location of the sensing target. For example, assuming that two adjacent times of measurement are sufficiently short in time (for example, 5 to 10 ms) relative to pedestrian motion, the pedestrian can be approximated as moving in a straight line at a uniform speed in this period, so that a location of the pedestrian at the next moment can be predicted.

In an optional implementation, that the first device sends the first measurement quantity result includes:

the first device sends the first measurement quantity result and a first timestamp, where the first timestamp is a timestamp corresponding to the first measurement quantity result; or
the first device sends the first measurement quantity result and a first serial number in a case that the sensing measurement is periodic measurement, where the first serial number is a serial number corresponding to the first measurement quantity result.

The first timestamp is a timestamp at which the first measurement quantity result is recorded by the first device, so that the measurement time corresponding to each first measurement quantity result can be accurately represented by the first measurement quantity result and the first timestamp, and then the third device can accurately determine the trajectory of the sensing target.

The first serial number may be a measurement serial number of the first measurement quantity results, so that the measurement time corresponding to each first measurement quantity result can be accurately represented by the first measurement quantity result and the first serial number, and then the third device can accurately determine the trajectory of the sensing target.

In an optional implementation, that the first device sends the first measurement quantity result includes:

the first device sends a plurality of first measurement quantity results, where the plurality of first measurement quantity results are measurement quantities obtained through a plurality of times of sensing measurement.

The plurality of first measurement quantity results may be measurement quantity results measured at a plurality of measurement moments, so that the third device can accurately determine the trajectory of the sensing target based on the plurality of first measurement quantity results.

In an optional implementation, the method further includes:

performing, by the first device, angle power spectrum (Angle Power Spectrum, APS) measurement on a wireless channel in which the sensing target is located, to obtain a second measurement quantity result of a second measurement quantity, where the second measurement quantity includes: an angle of arrival APS and/or an angle of departure APS of the channel; and
sending, by the first device, the second measurement quantity result, where the second measurement quantity result is used for determining at least one of an initial location and the trajectory of the sensing target.

The angle of arrival APS may be denoted as angle of arrival (Angle of Arrival, AOA) APS, namely, AOA APS, and the angle of departure APS may be denoted as angle of departure (Angle of Departure, AOD) APS, namely, AOD APS.

The second measurement quantity result of the second measurement quantity can be obtained according to an angle measurement method in an NR positioning technology and NR beam management ideas, or can be implemented by using an algorithm of the first device. For example, the angle power spectrum can be obtained through Fast Fourier Transform (Fast Fourier Transform, FFT) (including zero-padded FFT), a commonly used spatial filter (for example, a Bartlett Beamformer (Bartlett Beamformer)), minimum variance distortionless response (Minimum Variance Distortionless Response, MVDR), multiple signal classification (Multiple Signal Classification, MUSIC), and refinement algorithms thereof. In addition, in this embodiment of this application, dynamic reflection path recognition can be implemented by Doppler spectrum estimation combined with pattern recognition or machine learning. This is not specifically limited.

The sending of the second measurement quantity result by the first device may be directly or indirectly to the third device. After receiving the second measurement quantity result, the third device determines at least one of the initial location or the trajectory of the sensing target based on the second measurement quantity result.

In this implementation, the positioning capabilities of the communication system can be further improved through the second measurement quantity result.

Optionally, the performing, by the first device, APS measurement on a wireless channel in which the sensing target is located, to obtain a second measurement quantity result of a second measurement quantity includes at least one of:

in a case that the second measurement quantity includes the angle of departure APS, and the first device is a network side device, performing, by the first device, downlink beam sweeping, receiving a first beam sweeping measurement result sent by a terminal, and determining the angle of departure APS according to the first beam sweeping measurement result, where the beam sweeping measurement result includes reference signal received power (Reference Signal Received Power, RSRP) measurement results corresponding to a plurality of beams;
in a case that the second measurement quantity includes the angle of arrival APS, and the first device is a terminal, measuring, by the first device, an RSRP measurement result of a fixed downlink beam, and determining the angle of arrival APS according to the RSRP measurement result of the fixed downlink beam;
in a case that the second measurement quantity includes the angle of departure APS, and the first device is a terminal, performing, by the first device, uplink beam sweeping, receiving a second beam sweeping measurement result sent by a network side device, and determining the angle of departure APS according to the second beam sweeping measurement result, where the beam sweeping measurement result includes RSRP measurement results corresponding to a plurality of beams; or
in a case that the second measurement quantity includes the angle of arrival APS, and the first device is a network side device, measuring, by the first device, an RSRP measurement result of a fixed uplink beam, and determining the angle of arrival APS according to the RSRP measurement result of the fixed uplink beam.

The fixed downlink beam may be a downlink beam of the network side device corresponding to a maximum downlink-positioning reference signal (DownLink-Positioning Reference Signal, DL-PRS) RSRP measured by the terminal, and the fixed uplink beam may be an uplink beam of the terminal corresponding to a maximum uplink-sounding reference signal (Uplink-Sounding Reference Signal, UL-SRS) RSRP measured by the network side device.

Optionally, the method further includes:

suppressing interference energy other than a dynamic reflection path spectrum peak in the second measurement quantity result, to obtain the suppressed second measurement quantity result; and
the sending, by the first device, the second measurement quantity result includes:
sending, by the first device, the suppressed second measurement quantity result.

The suppressing interference energy other than a dynamic reflection path spectrum peak in the second measurement quantity result may be to identify and track the spectrum peak corresponding to the dynamic reflection path based on the plurality of measurement quantity results by detecting spectrum peak power fluctuations, using another pattern recognition method, or using a machine learning method, and then suppress the interference energy other than the dynamic reflection path spectrum peak in a subsequent measurement quantity result to obtain the second measurement quantity result with suppressed interference energy.

In this implementation, because the suppressed second measurement quantity result is reported, the accuracy of the sensing positioning can be improved.

Optionally, the sending, by the first device, the second measurement quantity result includes:

sending, by the first device, the second measurement quantity result and a second timestamp, where the second timestamp is a timestamp corresponding to the second measurement quantity result; or
sending, by the first device, the second measurement quantity result and a second serial number in a case that the APS measurement is periodic measurement, where the second serial number is a serial number corresponding to the second measurement quantity result.

In this implementation, the measurement time corresponding to each second measurement quantity result can be accurately represented by the second measurement quantity result and the second timestamp, so that the third device can accurately determine at least one of the initial location and the trajectory of the sensing target. Moreover, the measurement time corresponding to each second measurement quantity result can be accurately represented by the second measurement quantity result and the second serial number, so that the third device can accurately determine at least one of the initial location and the trajectory of the sensing target.

Optionally, the second measurement quantity includes one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

The channel angle of arrival APS refers to an angle of arrival APS of the entire channel, and the channel angle of departure APS refers to an angle of departure APS of the entire channel. The within the target angle range may be identified from historical APS measurement results and dynamic reflection path spectrum peaks. In this way, only measurement quantity result of the angle of arrival APS or the angle of departure APS within the target angle range needs to be reported, to reduce reporting overheads.

Optionally, the method further includes:

receiving, by the first device, angle information sent by a third device, where the angle information includes an angle of arrival or an angle of departure from the sensing target to the first device; and
the performing, by the first device, APS measurement on the sensing target, to obtain the second measurement quantity includes:
performing, by the first device, APS measurement of the angle of arrival or the angle of departure on the sensing target to obtain the second measurement quantity, where
the third device is a device configured to calculate the positioning sensing result of the sensing target.

The third device may include one of:
a sensing network function entity, a core network device, a network side device, or a terminal.

The angle information may be the angle of arrival or the angle of departure of the sensing target to each first device that is determined based on location coordinates of the sensing target that are determined by the third device based on a Doppler frequency measurement result and a trajectory initial location estimation result of the sensing target.

In this implementation, the APS measurement of the angle of arrival or the angle of departure is performed on the sensing target, to reduce a measurement calculation amount at the terminal, and reduce reporting overheads.

In an optional implementation, the method further includes:
receiving, by the first device, parameter configuration information of the sensing measurement.

The parameter configuration information may be sent by the third device to the first device, and in some implementations, the parameter configuration information may alternatively be protocol defined or pre-configured.

Optionally, the parameter configuration information includes at least one of:

a waveform, a subcarrier spacing, a bandwidth, burst (Burst) duration, an intra-Burst signal time interval, an inter-Burst time interval, transmit power, a signal format, a signal direction, a time resource, a frequency resource, antenna information, or a quasi-co-located (Quasi co-location, QCL) relationship, where
one Burst refers to a set of sensing signals/integrated sensing and communication signals/reference signals sent continuously in time domain; and
the antenna information includes at least one of:
an antenna index, an antenna port index, or an antenna quantity.

The waveform may include at least one of:
orthogonal frequency division multiplex (Orthogonal frequency division multiplex, OFDM), SC-FDMA, orthogonal time frequency space (Orthogonal Time Frequency Space, OTFS), a frequency modulated continuous wave (Frequency Modulated Continuous Wave, FMCW), or a pulse signal.

The intra-Burst signal time interval refers to a time interval of sensing signals/integrated sensing and communication signals/reference signals within one burst, and the inter-Burst time interval refers to a time interval of adjacent bursts before and after when a plurality of bursts need to be sent.

The signal format may be synchronization signal block (Synchronization Signal Block, SSB), PRS, demodulation reference signal (Demodulation Reference Signal, DMRS), or scheduling request (Scheduling Request, SR).

The signal direction may be a direction of the first signal or beam information.

The time resource may be index information of a time resource of the first signal, for example, an index of a slot where the first signal is located or a symbol index of the slot.

The frequency resource may be a center frequency, a bandwidth, a resource block (Resource block, RB), a subcarrier, Point A, a starting bandwidth location of the first signal, or the like, where Point A is a reference point of the frequency resource.

The QCL relationship may be a QCL relationship between a resource of the first signal and an SSB. For example, the first signal includes a plurality of resources, each of which is QCL to one SSB. In this embodiment of this application, the QCL relationship may include a protocol-defined Type A, Type B, Type C, or Type D QCL relationship.

In an optional implementation, the method further includes:
reporting, by the first device, device information of the first device to a third device, where the device information is used by the third device to determine whether the first device participates in collaborative sensing.

The reporting, by the first device, device information of the first device to a third device may include at least one of:

in a case that the first device is a terminal, reporting, by the first device, the device information of the first device to the third device through a network side device; or
in a case that the first device is a network side device, reporting, by the first device, the device information of the first device to the third device, and reporting device information of a terminal to the third device, where the device information of the terminal is used by the third device to determine whether the terminal participates in collaborative sensing of the sensing target.

The device information may include at least one of:
status information, sensing capability information, or prior information.

The status information may include at least one of:
location information, a location information determining manner, motion status information, panel orientation information, panel inclination angle information, communication status information, sensing status information, or beamforming configuration information.

The sensing capability information may include at least one of:
maximum bandwidth and time-frequency resources, a quantity of antennas, or a maximum sensing distance that can be used for supporting sensing.

In this implementation, through the device information, the third device can flexibly select the device participating in the collaborative sensing according to actual requirements and situations of the sensing target.

In embodiments of this application, the first device performs sensing measurement on a sensing target to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and the first device sends the first measurement quantity result, where the first measurement quantity result is used for determining a positioning sensing result of the sensing target. In this way, by using the first measurement quantity result sent by the first device, sensing positioning of the sensing target can be implemented, thereby improving positioning capabilities of the communication system.

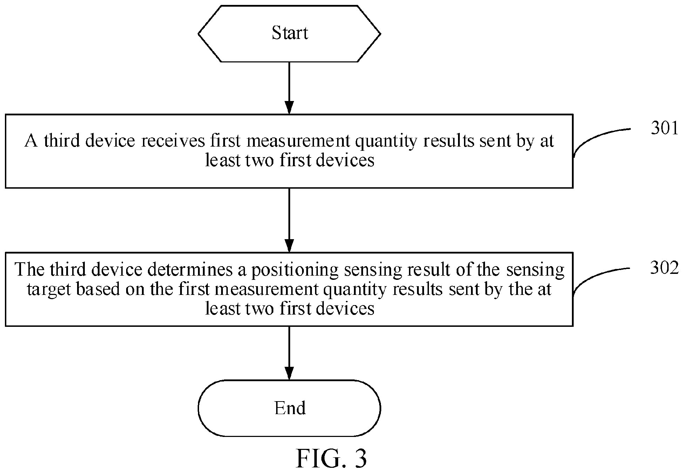

Refer to FIG. 3. FIG. 3 is a flowchart of another target positioning sensing method according to an embodiment of this application. As shown in FIG. 3, the method includes the following steps:

Step 301: A third device receives first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device.

Step 302: The third device determines a positioning sensing result of the sensing target based on the first measurement quantity results sent by the at least two first devices.

According to the first measurement quantity result reported by each first device, the third device can determine a dynamic reflection path of the sensing target to the first device, so that intersections between dynamic reflection paths corresponding to at least two first devices can be determined, and then a location of the sensing target can be determined based on such intersections. For example, an intersection between dynamic reflection paths corresponding to two first devices is a current location of the sensing target.

Optionally, the first device includes:
a terminal, a network side device, or a dedicated sensing device for performing sensing measurement.

The second device includes:
a terminal, a network side device, or a dedicated sensing device for sending the first signal.

Optionally, the positioning sensing result includes at least one of:

a speed of the sensing target;
a speed direction of the sensing target;
a trajectory of the sensing target; or
a future predicted location of the sensing target.

The speed of the sensing target may be determined based on the reflection path Doppler frequency or the reflection path length change speed in the at least two first measurement quantity results and locations of the first device and the second device.

The speed direction of the sensing target may be determined based on the reflection path Doppler frequency or the reflection path length change speed in the at least two first measurement quantity results and locations of the first device and the second device.

The trajectory of the sensing target may be determined based on locations of the sensing target at a plurality of measurement moments, where the locations of the sensing target are determined based on the reflection path Doppler frequency or the reflection path length change speed in the at least two first measurement quantity results.

The future predicted location of the sensing target may be a location predicted at next one or more moments according to a current location of the sensing target. For example, assuming that two adjacent times of measurement are sufficiently short in time (for example, 5 to 10 ms) relative to pedestrian motion, the pedestrian can be approximated as moving in a straight line at a uniform speed in this period, so that a location of the pedestrian at the next moment can be predicted.

Optionally, the first signal includes one of:
a dedicated sensing signal, an integrated sensing and communication signal, or an LTE or NR reference signal.

Optionally, that a third device receives first measurement quantity results sent by at least two first devices includes:

the third device receives the first measurement quantity results and first timestamps sent by the at least two first devices, where the first timestamps are timestamps corresponding to the first measurement quantity results; or
the third device receives the first measurement quantity results and first serial numbers sent by the at least two first devices in a case that the sensing measurement is periodic measurement, where the first serial numbers are serial numbers corresponding to the first measurement quantity results.

That the third device determines a positioning sensing result of the sensing target based on the first measurement quantity results sent by the at least two first devices includes:

the third device determines the positioning sensing result of the sensing target based on the first measurement quantity results and the first timestamps sent by the at least two first devices; or
the third device determines the positioning sensing result of the sensing target based on the first measurement quantity results and the first serial numbers sent by the at least two first devices.

Optionally, that a third device receives first measurement quantity results sent by at least two first devices includes:
the third device receives a plurality of first measurement quantity results sent by the at least two first devices, where the plurality of first measurement quantity results are measurement quantities obtained through a plurality of times of sensing measurement.

Optionally, the method further includes:

receiving, by the third device, second measurement quantity results sent by at least two second devices, where the second measurement quantity results are results of a second measurement quantity that are obtained by the second devices by performing angle power spectrum APS measurement on a wireless channel in which the sensing target is located, and the second measurement quantity includes: an angle of arrival APS and/or an angle of departure APS of the channel; and
the determining a positioning sensing result of the sensing target includes:
determining, by the third device, an initial location of the sensing target;
determining, by the third device, a current speed and a speed direction of the sensing target according to the initial location and the first measurement quantity results;
determining, by the third device, a current location of the sensing target according to the initial location, the first measurement quantity results, and the second measurement quantity results; and
determining, by the third device, a trajectory of the sensing target based on the initial location, the current speed, the speed direction, and the current location.

The initial location may be a pre-estimated location, or an initial location assumed from prior information.
In an implementation, the initial location of the sensing target includes:

in a case that the sensing target is a terminal, an initial location of the sensing target determined based on a terminal positioning technology; or
in a case that the sensing target is not a terminal, an initial location of the sensing target determined based on a device-free (device-free) technology.

The initial location of the sensing target determined based on the terminal positioning technology may be an initial location of the sensing target determined based on a positioning system (for example, a global positioning system (Global Positioning System, GPS)), or an initial location of the sensing target determined based on an LTE or NR positioning technology, or an initial location of the sensing target determined through Bluetooth (Bluetooth) and Ultra Wide Band (Ultra Wide Band, UWB).
Optionally, the initial location of the sensing target determined based on the device-free technology includes:

an initial location of the sensing target determined based on echolocation; or
an initial location of the sensing target determined based on angle information of the sensing target.

The initial location of the sensing target determined based on echolocation may be obtained by the network side device or the terminal by locating the target based on an echo by spontaneously self-collecting sensing signals. For example, at a trajectory sensing service start moment, the network side device emits a sensing signal to the sensing target and receives an echo, and performs distance measurement and angle measurement on the pedestrian, to obtain an initial location of a pedestrian motion trajectory.
The initial location of the sensing target determined based on the angle information of the sensing target may be an initial location of the sensing target estimated based on a reflection path angle of arrival or departure of the first device to the sensing target.
In an implementation, for a first device with a high sensing capability, the device is capable of sensing in a spontaneous self-collection manner, with a large quantity of antennas and bandwidth and high sensing resolution. In this way, initial positioning on the sensing target can be achieved by using angle information measured by the single first device.

In another implementation, the initial location of the sensing target determined based on the angle information of the sensing target is determined in the following manner:

calculating, by the third device, a confidence of each candidate location in a plurality of candidate locations in an initial location search area, where the confidence of each candidate location is determined based on angle information of at least two first devices to the sensing target; and

determining, by the third device, a location with a greatest confidence in the plurality of candidate locations as the initial location of the sensing target.

The initial location search area may be a search range of the sensing target determined according to prior information, for example, the initial location search area is determined based on positioning information of LTE or NR, historical trajectory information, environmental map information, and the like. The positioning information of LTE or NR may be used prior to trajectory sensing, an approximate location of the target is known for the LTE or NR positioning method. The historical trajectory information may be trajectory information of daily behavior habits of the sensing target, and the environmental map information may be an area in which obstacles exist.

The angle information of the first device to the sensing target may be the second measurement quantity result of the second measurement quantity obtained by the first device by performing APS measurement on the wireless channel in which the sensing target is located, where the second measurement quantity result includes the measured angle of arrival APS and/or angle of departure APS.

In this implementation, because the initial location of the sensing target is determined in the initial location search area, the search range of the sensing target can be narrowed, reducing the calculation amount, and improving the sensing efficiency.

Optionally, the calculating, by the third device, a confidence of each candidate location in a plurality of candidate locations in an initial location search area includes:

determining, by the third device, an estimated motion trajectory of the sensing target according to the speed and the speed direction of the sensing target;

assuming, by the third device, that the initial location of the sensing target is a first candidate location in the initial location search area, and determining, based on the first candidate location and the estimated motion trajectory, an angle of arrival and/or an angle of departure of a dynamic reflection path corresponding to each trajectory point on the estimated motion trajectory;

determining, by the third device according to target information, a trajectory location confidence of each trajectory point at which the sensing target is located on the estimated motion trajectory, where the target information includes: the angle of arrival and/or the angle of departure of the dynamic reflection path corresponding to each trajectory point on the estimated motion trajectory, and the second measurement quantity results reported by the first devices; and

determining, by the third device, an initial location confidence corresponding to the first candidate location according to the trajectory location confidence corresponding to each trajectory point on the estimated motion trajectory, where the first candidate location is any candidate location in the plurality of candidate locations.

The determining an estimated motion trajectory of the sensing target according to the speed and the speed direction of the sensing target may be estimating an estimated motion trajectory of the sensing target at a plurality of moments according to the speed and the speed direction of the sensing target, for example, estimated motion trajectories at moments $t_n$, $n = 1, 2, 3,..., N$, where each trajectory point in the estimated motion trajectory corresponds to a moment.

The determining, based on the first candidate location and the estimated motion trajectory, an angle of arrival and/or an angle of departure of a dynamic reflection path corresponding to each trajectory point on the estimated motion trajectory may be assuming that the initial location of the sensing target is the first candidate location, thereby determining the location of each trajectory point on the estimated motion trajectory and calculating the angle of arrival and/or the angle of departure of the dynamic reflection path of each trajectory point to the location of the first device.

The second measurement quantity results reported by the first device may include a second measurement quantity result at a moment corresponding to each trajectory point, namely, including second measurement quantity results at moments $t_n$, $n = 1, 2, 3,..., N$. The second measurement quantity result includes an angle of arrival APS and/or an angle of departure APS. In this case, the angle of arrival and/or the angle of departure of the dynamic reflection path corresponding to each trajectory point is substituted into the corresponding angle of arrival APS and/or the angle of departure APS to determine a power value corresponding to each trajectory point. The power value is associated with a trajectory location confidence of the trajectory point, for example, the trajectory location confidence of the trajectory point is equal to a product of the power value and a weight of the first device. Alternatively, when the weight is not set, the trajectory location confidence of the trajectory point is equal to the power value corresponding to the first device.

The determining, by the third device, an initial location confidence corresponding to the first candidate location according to the trajectory location confidence corresponding to each trajectory point on the estimated motion trajectory may be using a product of the trajectory location confidences corresponding to the trajectory points as the initial location confidence of the first candidate location, or a sum of the trajectory location confidences corresponding to the trajectory points as the initial location confidence of the first candidate location.

In this implementation, the initial location confidence of each candidate location can be calculated, which can improve readiness of the initial location of the sensing target.

Optionally, the target information further includes:

a weight of each first device, where the weight indicates a measurement quantity confidence of the corresponding first device, where

the trajectory location confidence is positively correlated with a first value of each first device, and the first value is a product of the weight of the corresponding first device and the second measurement quantity.

In this implementation, where the trajectory location confidence is determined by a plurality of first devices, a corresponding weight may be determined for each first device.

That the trajectory location confidence is positively correlated with a first value of each first device may be that when the first value of the first device is large, the trajectory location confidence is large; and when the first value of the first device is small, the trajectory location confidence is small. For example, the trajectory location confidence is equal to a sum of the first values of the plurality of first devices, or the trajectory location confidence is equal to a product of the first values of the plurality of first devices.

In this implementation, due to the addition of the weight of each first device, accuracy of the initial location of the sensing target can be further improved.

Optionally, the weight corresponding to each first device is determined for the third device based on device information of the first device, where

the device information includes at least one of:
status information, sensing capability information, or prior information.

The status information includes at least one of:
location information, a location information determining manner, motion status information, panel orientation information, panel inclination angle information, communication status information, sensing status information, or beamforming configuration information.

In some implementations, the weight of the first device may alternatively be reported by the first device to the third device.

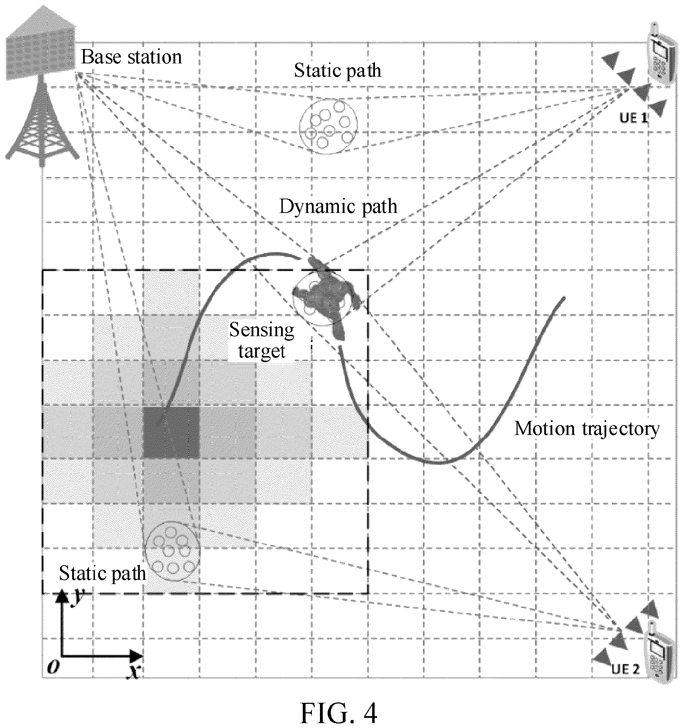

The determining of the initial location of the sensing target is described below by taking FIG. 4 as an example. For example, in FIG. 4, a quantity of UEs participating in collaborative sensing is 2, and the sensing target is a pedestrian. For the sake of intuition, it is assumed that relative locations of a base station, the UEs, and the pedestrian are as shown in FIG. 4 (where in practice, the UEs and the base station do not necessarily need to be at three vertices of the square area), and location coordinates of the base station and UEs and an own multi-antenna array orientation are known. For each measurement moment, UE 1 and UE 2 may obtain an angle of arrival APS of a downlink signal or an angle of departure APS of an uplink signal including a dynamic reflection path caused by the pedestrian, and the base station may also obtain an angle of departure APS of the downlink signal or an angle of arrival APS of the uplink reflected signal including the dynamic reflection path caused by the pedestrian. The specific angle estimation can be obtained based on an angle measurement method in an LTE or NR positioning technology and NR beam management ideas, or can be implemented by using an algorithm of the UE or the base station, for example, the APS can be obtained through FFT (including zero-padded FFT), a commonly used spatial filter such as a Bartlett beamformer (Bartlett Beamformer), MVDR, MUSIC, and refinement algorithms thereof. Dynamic reflection path recognition can be implemented by Doppler spectrum estimation combined with pattern recognition or machine learning.

As long as any two of UE 1, UE 2, and the base station determine an angle of arrival/angle of departure of a reflected signal of the sensing target for any moment in the trajectory tracking process, an intersection of extension lines of UE 1, UE 2, and the base station as starting points along an estimated angle direction is a pedestrian location. However, because a sensing capability of the UE is weak, and different UEs may have different sensing capabilities, the pedestrian location obtained through collaborative sensing of UEs (or collaboration between the base station and the UE) is estimated to be a wide area. A greater quantity of UEs participating in sensing indicates a higher confidence of an overlapping area of estimated areas between all UEs.

It is assumed that at a moment $t_n$, $n$ = 1, 2, 3,..., $N$, channel angle power spectrum APSs obtained by UE1, UE2, and the base station is $P_{u1}(\varphi_1, t_n), \varphi_1 \in [\varphi_{min1}, \varphi_{max1}]$, $P_{u2}(\varphi_2, t_n)$, $\varphi_2 \in [\varphi_{min2}, \varphi_{max2}]$, and $P_0(\varphi_0, t_n), \varphi_0 \in [\varphi_{min0}, \varphi_{max0}]$. In the previous speed and trajectory estimation for the sensing target, because the speed and the speed direction of the target at each moment can be estimated, the trajectory shape of the target within a period of time $t_n, n$ = 1, 2, 3,..., $N$ can be obtained. A sensing area is divided into a grid map as shown in FIG. 4, where a grid size of the grid map can be determined according to a UE sensing capability, and theoretically all grids on the map can be traversed as assumed trajectory initial locations. In this case, for each location on the corresponding trajectory, a corresponding UE angle of arrival (or angle of departure) can be obtained based on each UE location, and then substituted into a UE angle power spectrum at a corresponding moment to obtain a corresponding power value. It is assumed that at the moment $t_n$, $n$ = 1, 2, 3,..., $N$, the pedestrian location is $(x_n, y_n)$, the corresponding base station angle of arrival is $\varphi_{n0}$, the angle of arrival of UE 1 is $\varphi_{n1}$, and the angle of arrival of the corresponding UE 2 is $\varphi_{n2}$. Therefore, a confidence of the pedestrian at the location $(x_n, y_n)$ (namely, the trajectory location confidence of the trajectory point corresponding to the location) may be defined as:

$$C^n_{position} = \begin{cases} \left[\lambda_{u1}(t_n)P_{u1}(\varphi_{n1}, t_n)\right] \cdot \left[\lambda_{u2}(t_n)P_{u2}(\varphi_{n2}, t_n)\right]; \\ \left[\lambda_0(t_n)P_0(\varphi_{n0}, t_n)\right] \cdot \left[\lambda_{u1}(t_n)P_{u1}(\varphi_{n1}, t_n)\right] \cdot \left[\lambda_{u2}(t_n)P_{u2}(\varphi_{n2}, t_n)\right]; \\ \left[\lambda_{u0}(t_n)P_0(\varphi_{n0}, t_n)\right] \cdot \left[\lambda_{ui}(t_n)P_{ui}(\varphi_{ni}, t_n)\right], i = 1 \text{ or } 2; \end{cases}$$

when only UE 1 and UE 2 perform APS measurement when the base station, UE 1, and UE 2 all perform APS measurement when one of the base station, UE 1, and UE 2 perform APS measurement [0229] or

$$C^n_{position} = \begin{cases} \left[\lambda_{u1}(t_n)P_{u1}(\varphi_{n1}, t_n)\right] + \left[\lambda_{u2}(t_n)P_{u2}(\varphi_{n2}, t_n)\right]; \\ \left[\lambda_0(t_n)P_0(\varphi_{n0}, t_n)\right] + \left[\lambda_{u1}(t_n)P_{u1}(\varphi_{n1}, t_n)\right] + \left[\lambda_{u2}(t_n)P_{u2}(\varphi_{n2}, t_n)\right]; \\ \left[\lambda_{u0}(t_n)P_0(\varphi_{n0}, t_n)\right] + \left[\lambda_{ui}(t_n)P_{ui}(\varphi_{ni}, t_n)\right], i = 1 \text{ or } 2; \end{cases}$$

when only UE 1 and UE 2 perform APS measurement when the base station, UE 1, and UE 2 all perform APS measurement when one of the base station, UE 1, and UE 2 perform APS measurement

$\lambda_{u1}(t_n), \lambda_{u2}(t_n), \lambda_0(t_n)$ are weight coefficients for UE 1, UE 2, and the base station respectively, where the weight coefficients reflect the (measurement) confidence of the foregoing sensing node, and are determined by the third device according to prior information such as a sensing capability of the UE (or the base station) participating in sensing, the method used for location determining of the UE (or the base station), coordinate location information of the UE (or the base station), or array orientation information of the UE (or the base station), or may be self-determined and reported by collaborative sensing UEs (base stations) according to the foregoing information. The UE (or base station) sensing capability may include system configuration information such as UE (or base station) sensing bandwidth and a UE (or base station) antenna quantity, and the method used for location determining can represent information of UE (or base station) location accuracy. In addition, the weight coefficient takes a value range of (0, 1) or (0, a non-negative value), and a larger value indicates a higher confidence of the sensing result representing the corresponding sensing UE (base station). The weight may be a fixed value during tracking, or may be a variable within a range of values, that is, may be associated with time or a sensing target spatial location. To make a comprehensive consideration of confidences of all N estimated locations on the entire trajectory to determine the most possible trajectory starting location, a confidence of the initial location $(x_i, y_i)$ is defined as

$$C^i_{trace} = C^1_{position} \cdot C^2_{position} \cdot \ldots \cdot C^N_{position} = \prod_{n=1}^{N} C^n_{position}.$$

or

$$C^i_{trace} = C^1_{position} + C^2_{position} + \ldots + C^N_{position} = \sum_{n=1}^{N} C^n_{position}.$$

$C^n_{position}$ $n = 1, 2, 3, \ldots, N$ represents the location confidence of different measurement moments (that is, different tra-

jectory points), and $C^i_{trace}$ the confidence of the initial location $(x_i, y_i)$.

It should be noted that, $C^n_{position}$ may be location confidences of different measurement moments (that is, different trajectory points) determined in either of the two manners described above. Alternatively, with the defined location confidence $C^n_{position}$ as an independent variable, it is obtained by using a pre-set function that is a monotonically increasing function of the independent variable.

Assuming that a total of I grids are divided in the sensing area, all grids are traversed to calculate $C^i_{trace}$, $i = 1,2,...,I$, and a grid corresponding to a maximum trajectory confidence obtained is the most possible initial location of the sensing target pedestrian. As shown in FIG. 4, different color depths represent trajectory confidence values for different grids. In fact, if some prior information about the initial location of the sensing target is known in advance by the network, such as LTE or NR based positioning information (for example, an approximate location of the target is known using NR positioning methods before trajectory sensing begins), historical trajectory information (for example, sensing target routine behavior habits), and environmental map information (for example, obstacles exist in other areas). The grid search range can be narrowed down, as in the bold dashed boxed area in FIG. 4. This can significantly reduce the calculation amount of network sensing.

It should be noted that in this embodiment of this application, only two first device is required to obtain a speed vector $v_{person}$ of the sensing target when determining the speed and the trajectory of the sensing target. When the quantity of collaborative sensing first devices is larger, the third device or the network side device may pick two first devices with the highest confidence according to grasped device information of the first devices to perform measurement to obtain the $v_{person}$ result, or a larger quantity of first devices are used for measurement to obtained the result of $v_{person}$ comprehensively.

In addition, in this embodiment of this application, the foregoing manner of calculating the confidence of the initial location of the sensing target may be applied to trajectory tracking of the sensing target. For other collaborative sensing services of the sensing target, when a plurality of first devices can be used for collaborative sensing, the foregoing manner can be used to quantify a confidence of a measurement quantity result of the first device to improve the sensing accuracy. The collaborative sensing herein means that the same one or more measurement quantities can be measured by a plurality of different first devices to achieve a sensing purpose (that is, to obtain a final sensing result), and the final sensing result is synthetically determined based on measurement quantity results of the plurality of first devices.

Optionally, the second measurement quantity is a suppressed second measurement quantity obtained by the first device by suppressing interference energy other than a dynamic reflection path spectrum peak in the second measurement quantity.

For this implementation, refer to related descriptions in the embodiment shown in FIG. 2. Details are not described herein again.

Optionally, the receiving, by the third device, second measurement quantity results sent by at least two first devices includes:

receiving, by the third device, the second measurement quantity results and second timestamps sent by the at least two first devices, where the second timestamps are timestamps corresponding to the second measurement quantity results; or

receiving, by the third device, the second measurement quantity results and second serial numbers sent by the at least two first devices in a case that the APS measurement is periodic measurement, where the second serial numbers are serial numbers corresponding to the second measurement quantity results.

The determining, by the third device, a current location of the sensing target according to the initial location, the first measurement quantity results, and the second measurement quantity results includes:

determining, by the third device, the current location of the sensing target according to the initial location, the first measurement quantity results, the second measurement quantity results, and the second timestamps; or

determining, by the third device, the current location of the sensing target according to the initial location, the first measurement quantity results, the second measurement quantity results, and the second serial numbers.

For this implementation, refer to related descriptions in the embodiment shown in FIG. 2. Details are not described herein again.

Optionally, the second measurement quantity includes at least one of:

a channel angle of arrival APS or a channel angle of departure APS; or

an angle of arrival APS within a target angle range of a dynamic reflection path of the channel, or an angle of departure APS within the target angle range of the dynamic reflection path of the channel.

For this implementation, refer to related descriptions in the embodiment shown in FIG. 2. Details are not described herein again.

Optionally, the method further includes:

sending, by the third device, angle information to at least two first devices, where the angle information includes an angle of arrival or an angle of departure from the sensing target to the first device; and

the second measurement quantity includes:

a measurement quantity obtained by the first device by performing APS measurement of the angle of arrival or the angle of departure on the sensing target.

For this implementation, refer to related descriptions in the embodiment shown in FIG. 2. Details are not described herein again.

Optionally, the method further includes:

sending, by the third device, parameter configuration information of the sensing measurement to the at least two first devices and the sending device.

For this implementation, refer to related descriptions in the embodiment shown in FIG. 2. Details are not described herein again.

Optionally, the parameter configuration information includes at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, where

one Burst refers to a set of sensing signals/integrated sensing and communication signals/reference signals sent continuously in time domain; and

the antenna information includes at least one of:

an antenna index, an antenna port index, or an antenna quantity.

For this implementation, refer to related descriptions in the embodiment shown in FIG. 2. Details are not described herein again.

Optionally, the method further includes:

receiving, by the third device, device information sent by a plurality of devices, where the plurality of devices include at least one of: at least one terminal and at least one network side device; and

determining, by the third device, devices participating in collaborative sensing in the plurality of devices according to the device information sent by the plurality of devices.

For this implementation, refer to related descriptions in the embodiment shown in FIG. 2. Details are not described herein again.

Optionally, the device information includes at least one of:

status information, sensing capability information, or prior information.

For this implementation, refer to related descriptions in the embodiment shown in FIG. 2. Details are not described herein again.

Optionally, the status information includes at least one of:

location information, a location information determining manner, motion status information, panel orientation information, panel inclination angle information, communication status information, sensing status information, or beamforming configuration information.

For this implementation, refer to related descriptions in the embodiment shown in FIG. 2. Details are not described herein again.

Optionally, the determining, by the third device, devices participating in collaborative sensing in the plurality of devices according to the device information sent by the plurality of devices includes:

determining, by the third device, the devices participating in collaborative sensing in the plurality of devices according to the device information sent by the plurality of devices and sensing area information.

The sensing area information may be sensing area information determined by a sensing demanding party, or the sensing area information may be pre-configured.

The determining the devices participating in collaborative sensing in the plurality of devices according to the device information sent by the plurality of devices and sensing area information may be determining devices that match the sensing area information in the plurality of devices as the devices participating in the collaborative sensing, such as determining at least two first devices, and a second device. Alternatively, a corresponding first device and a second device are allocated to each sub-are in the sensing area.

Optionally, the method further includes:

allocating, by the third device, devices participating in collaborative sensing to the sensing target from among the determined devices participating in collaborative sensing.

The allocating devices participating in collaborative sensing to the sensing target may be allocating at least two first devices and a second device to the sensing target, for example, allocating devices participating in the collaborative sensing in a sub-area in which the sensing target is located to the sensing target.

Optionally, the allocating, by the third device, devices participating in collaborative sensing to the sensing target from among the determined devices participating in collaborative sensing includes:

allocating, by the third device, corresponding devices to each sensing sub-area, where the sensing sub-area is an area of a smaller physical range obtained by dividing a sensing area; and

allocating, by the third device, devices corresponding to a sensing sub-area in which the sensing target is located to the sensing target.

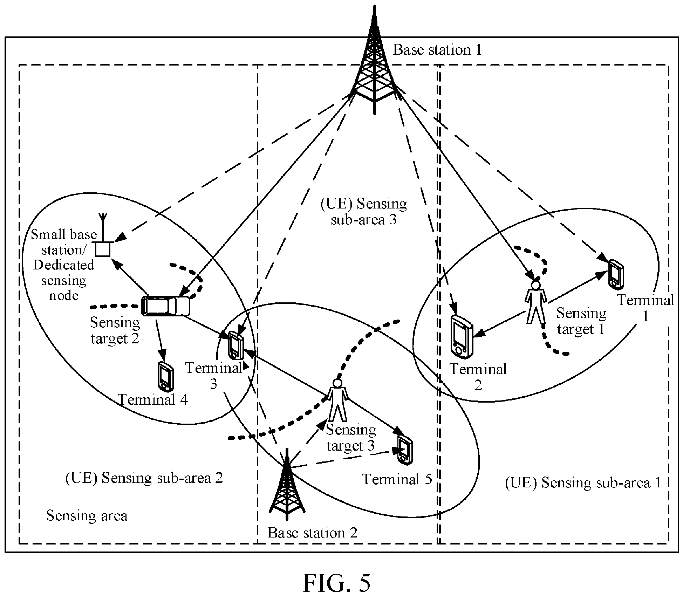

As shown in FIG. 5, an area shown in FIG. 5 is divided into a plurality of sensing sub-areas, with each sensing sub-area corresponding to a respective device.

Optionally, the allocation of the corresponding device to each sensing sub-area may be pre-configured.

The sensing sub-area in which the sensing target is located may be determined according to an initial location or may be determined according to prior information. This is not limited.

Optionally, the sensing sub-area includes: a network side device sensing sub-area and a terminal sensing sub-areas, at least one network side device is allocated to one network side device sensing sub-area, at least one terminal is allocated to one terminal sensing sub-area, and one network side device sensing sub-area covers at least one terminal sensing sub-area; and

the method further includes:

associating, by the third device, a network side device allocated to one network side device sensing sub-area with a terminal allocated to at least one terminal sensing sub-area.

In some implementations, the network side device sensing sub-area may alternatively not be set, for example, sensing positioning is performed on the sensing target by at least three terminals.

Optionally, in a case that a same terminal exists in terminals allocated to two terminal sensing sub-areas, the same terminal participates in collaborative sensing in the two terminal sensing sub-areas in a time division multiplexing manner, or a frequency division multiplexing manner, or a code division multiplexing manner.

In this way, the same terminal can participate in collaborative sensing of a plurality of sensing sub-areas.

Optionally, the method further includes:

updating, by the third device, devices participating in collaborative sensing for the sensing target, where

the updating devices participating in collaborative sensing includes at least one of:

adding a terminal, changing a terminal, removing a terminal, adding a network side device, changing a network side device, or removing a network side device.

The updating devices participating in collaborative sensing for the sensing target may be updating based on corresponding information of the sensing target, the first device, or the second device.

In this implementation, the accuracy of the sensing positioning result of the sensing target can be further improved by updating the devices participating in the collaborative sensing for the sensing target.

Optionally, the updating, by the third device, devices participating in collaborative sensing for the sensing target includes at least one of:

updating, by the third device under a first condition, a network side device participating in collaborative sensing for the sensing target; or

updating, by the third device under a second condition, a terminal participating in collaborative sensing for the sensing target, where

the first condition includes at least one of:

it is determined based on the trajectory of the sensing target that the sensing target is about to leave or has left a sensing sub-area corresponding to a network side device;

it is determined based on the trajectory of the sensing target that a distance between the sensing target and at least one network side device participating in collaborative sensing exceeds a maximum sensing distance of the corresponding device, and remaining network side devices participating in collaborative sensing are insufficient to improve a sensing result satisfying preset sensing quality of service (Quality of Service, QoS);

a first measurement quantity result reported by a network side device is lower than a preset threshold;

a first measurement quantity result reported by a terminal associated with a network side device is lower than a preset threshold;

a second measurement quantity result reported by a network side device is lower than a preset threshold;

a second measurement quantity result reported by a terminal associated with a network side device is lower than a preset threshold; or

it is determined based on the trajectory of the sensing target that a span of a trajectory physical range of the sensing target exceeds a preset threshold;

and/or

the second condition includes at least one of:

it is determined based on the trajectory of the sensing target that the sensing target is about to leave or has left a sensing sub-area corresponding to a terminal;

it is determined based on the trajectory of the sensing target that a distance between the sensing target and at least one terminal participating in collaborative sensing exceeds a maximum sensing distance of the corresponding terminal, and remaining terminals participating in collaborative sensing are insufficient to improve a sensing result satisfying preset sensing QoS;

a first measurement quantity result reported by a terminal is lower than a preset threshold;

a second measurement quantity result reported by a terminal is lower than a preset threshold;

it is determined based on the trajectory of the sensing target that a span of a trajectory physical range of the sensing target exceeds a preset threshold; or

switching of a network side device participating in sensing is triggered.

In this implementation, the terminal and the network side device participating in the collaborative sensing can be updated in time based on the first condition and the second condition described above.

Optionally, trajectory sensing of the sensing target is initiated by the third device based on a sensing requirement; and/or

trajectory sensing of the sensing target is ended by the third device based on a trajectory tracking end condition.

The sensing requirement may be initiated by the third device, the first device, the second device, or the sensing target according to actual requirements. In addition, the sensing requirement may include a trajectory tracking initiation condition, and the trajectory tracking initiation condition may include at least one of:

direct initiation by the sensing demanding party, not limited to time or place;

the sensing target arrives at a preset (physical) area based on other positioning technologies;

sensing target location information obtained by the sensing target based on other positioning technologies is received, where the location information may be sent by the sensing target or by the sensing demanding party; or

a preset sensing service start time is reached (for example, every Friday at 5:30 PM, trajectory tracking sensing is performed on a moving object (vehicle) at a specific intersection).

The foregoing trajectory tracking ending condition ending may be determined by the third device, the first device, the second device, or the sensing target, or pre-configured. For example, the trajectory tracking ending condition may include at least one of:

the sensing demanding party initiates a sensing service stop request;

a sensing service specified time is reached;

a predetermined quantity of times of measurement of a sensing service is reached;

the sensing target stops moving, and a stop time reaches a preset time threshold;

the sensing target arrives at or leaves a preset (physical) area; or

the first devices participating in the collaborative sensing cannot continue to provide the collaborative sensing service, and collaborative sensing conditions of all the first devices in the sensing area are not available.

It should be noted that this embodiment is an implementation of a corresponding network side device in the embodiment shown in FIG. 2. For a specific implementation of this embodiment, refer to related descriptions in the embodiment shown in FIG. 2. To avoid repeated descriptions, details are not described again in this embodiment.

The method according to embodiments of this application is described below by using an example in which the sensing target is a pedestrian, the first device is a UE, a base station, or a small base station, the second device is a UE, a base station, or a small base station, and the third device is a core network device.

Embodiment 1:

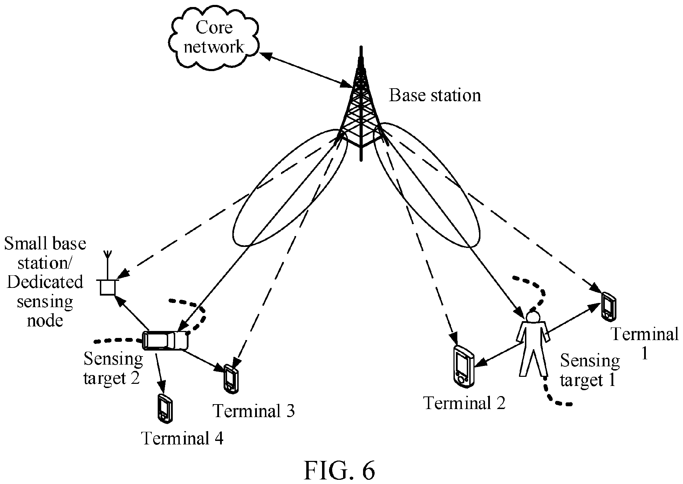

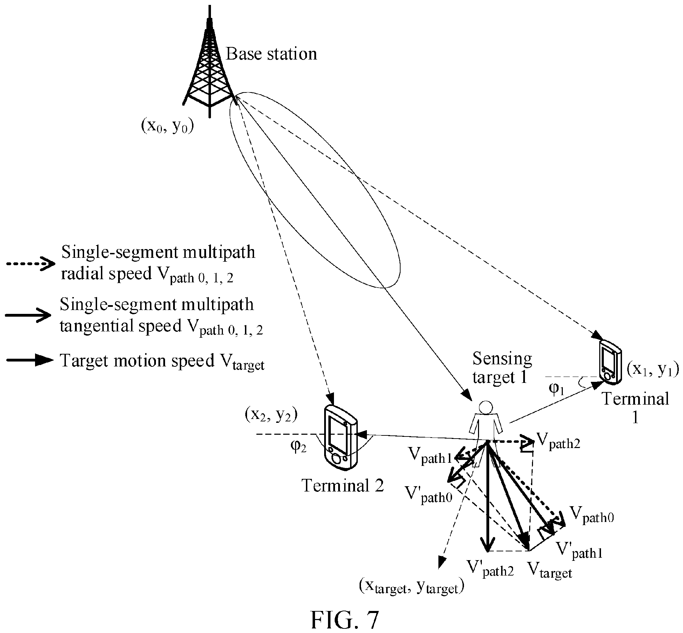

The positioning manner provided in this embodiment of this application is described in scenarios shown in FIG. 6 and FIG. 7 in this embodiment:

In an integrated sensing and communication scenario, motion trajectory tracking of the sensing target can be achieved by collaborative measurement of the sensing target by using stationary devices with sensing capabilities in a specific area. In this embodiment of this application, a device-free (device-free) positioning method may be used to improve the sensing performance, but a device-based (device-based) positioning method may also be flexibly combined to improve the sensing performance. The sensing scenario involved is shown in FIG. 6, assuming that there are some stationary devices within a cell, in Line of Sight (Line of Sight, LOS) relation to the base station. The devices can sense a trajectory of a moving object in a surrounding local area while performing communication/integrated sensing and communication services with associated cell base stations. Collaborative sensing nodes (that is, nodes that obtain a sensing measurement quantity) may be either base stations or terminals, satisfying a total quantity of sensing nodes of at least 3 (for example, including at least two first devices and one second device) for a specific sensing target. The sensing moving object may be a pedestrian or a vehicle, and in addition, the device participating in sensing is not limited to a mobile phone, but may be a small base station or a dedicated wireless sensing device (as shown on the left side of FIG. 6).

In this embodiment of this application, the sensing positioning method provided can achieve the following effects: The sensing computing power is dispersed over idle terminals, reducing the computing power burden on the base station or the network. The method has advantages in scenarios where terminals are dense, or where a base station sensing distance is limited. For example, the base station spontaneously self-collects through echo sensing, and a QoS requirement cannot be achieved when a signal reaches the sensing target and is reflected back to the base station. However, the collaborative sensing terminals are distributed around the sensing target, and signals reflected to reach the sensing terminals still meet the sensing QoS requirement.

Compared to continuous positioning based on existing positioning methods, pilots can be greatly reduced, and device-free sensing has no restriction on whether the sensing target is a terminal.

Compared to single-station or multi-station radar continuous sensing (continuous distance measurement and angle measurement), it can be used jointly to improve accuracy as a complementary method. Meanwhile, the sensing positioning provided in embodiments of this application can alternatively be used independently of existing positioning methods.

When the sensing target is also a terminal (that is, having the ability to communicate with a base station), the sensing positioning provided in embodiments of this application can alternatively be flexibly combined with other positioning methods to further improve the sensing accuracy.

Taking the scenario in which the terminal 1, the terminal 2, and the sensing target 1 (pedestrian) on the right side of the two scenarios in the figure as an example, as shown in FIG. 7, it is assumed that locations of the base station, the terminal 1, and the terminal 2 are known by the core network (sensing function) through the existing NR positioning method or the GPS positioning of the terminal. A communication/integrated sensing and communication service is performed between the terminals 1 and 2 and the base station. There are direct paths (that is, LOS paths, as indicated by the dashed arrows in the figure), as well as several Non-Line of Sight (Non-Line of Sight, NLOS) reflection paths on wireless channels between the terminals 1 and 2 and the base station, where the reflection paths may be divided into static reflection paths and dynamic reflection paths. A static reflection paths is a multipath caused by a static object in an environment (for example, a building or ground) and is not shown in FIG. 7 for simplicity. A dynamic reflection path is a multipath caused by a moving body (that is, a sensing target), as shown by the solid arrows. Because the sensing target is in motion, the Doppler frequency is introduced into the channel, and the length of the reflection path of the sensing target is to change. The length change speed is the Doppler frequency of the reflection path in propagation directions (incident and emitting directions relative to the human body) thereof. For the wireless channel from the base station to the terminal 1, only the reflection path caused by the pedestrian is a dynamic reflection path. For this channel, the Doppler frequency of the dynamic reflection path can be obtained through an LTE or NR reference signal (for example, an uplink positioning reference signal (Uplink-Positioning Reference Signal, UL-PRS) or a UL-SRS), or a new sensing/integrated sensing and communication signal, to further obtain the length change speed of the dynamic reflection path. This is the same for the wireless channel of the terminal 2, and a Doppler frequency of the corresponding reflection path can also be obtained. Doppler estimation may be performed by the terminal 1 and the terminal 2, or may be performed by the base station.

As shown in FIG. 7, it is assumed that the pedestrian motion direction is away from the base station and the speed vector is $v_{\text{person}}$, while assuming that pedestrian location coordinates are known at the current moment, as $x_{\text{person}}, y_{\text{person}}$). In FIG. 7, the reflection paths of the terminal 1 and the terminal 2 are both caused by the pedestrian, assuming that total length change speeds of the reflection paths are respectively $v_{\text{path}}^1, v_{\text{path}}^2$. (In practice, each terminal can estimate a Doppler frequency, and finally a plurality of Doppler estimates can be combined to determine a sensing target moving speed in combination). Taking the example shown in FIG. 7, the sensing target (pedestrian) divides the reflection path into three segments, pedestrian-to-base station, pedestrian-to-terminal 1, and pedestrian-to-terminal 2, respectively. It is assumed that the change speeds of the three reflection paths are respectively $v_{\text{path0}}$, $v_{\text{path1}}$, $v_{\text{path2}}$ (if the change speeds for the base station-to-pedestrian segments in the dynamic reflection paths corresponding to the terminal 1 and the terminal 2 are $v_{\text{path01}}, v_{\text{path02}}$ respectively, strictly speaking, $v_{\text{path01}} \neq v_{\text{path02}}$. Considering that the sensing target size tends to be small relative to the dynamic reflection path, it can be approximated as $v_{\text{path01}} = v_{\text{path02}} = v_{\text{path0}}$). The change speed of the reflection path is a radial speed along the direction of the reflection path of each segment at the reflection point on which the sensing target is located. Correspondingly, a tangential speed component of the reflection point with respect to the reflection path of each segment is assumed to be $v'_{\text{path0}}, v'_{\text{path1}}, v'_{\text{path2}}$. This component does not contribute to the length change of each reflection path and can therefore be disregarded in the calculation.

The pedestrian motion speed can be resolved into radial and tangential speeds at the reflection point of the dynamic reflection path. As shown in FIG. 7, for the pedestrian-to-base station reflection path, $\boldsymbol{v}_{\textbf{person}}$ can be decomposed into $\boldsymbol{v}_{\textbf{path0}}$ and $\boldsymbol{v}'_{\text{path0}}$; for the pedestrian-to-terminal 1 reflection path, $\boldsymbol{v}_{\textbf{person}}$ can be decomposed into $\boldsymbol{v}_{\textbf{path1}}$ and $\boldsymbol{v}'_{\text{path1}}$; and for the pedestrian-to-terminal 2 reflection path, $\boldsymbol{v}_{\textbf{person}}$ can be decomposed into $\boldsymbol{v}_{\textbf{path2}}$ and $\boldsymbol{v}'_{\text{path2}}$. Based on the base station location $(x_0, y_0)$, the terminal 1 location $(x_1, y_1)$, and the pedestrian location $(x_{\text{person}}, y_{\text{person}})$ at the current moment, a direction of the radial speed vector $v_{\text{path0}}$, $v_{\text{path1}}$, $v_{\text{path2}}$ can be easily obtained. It is assumed that a location vector of the pedestrian is:

$$\boldsymbol{p}_{\text{person}} = \left\langle x_{\text{person}}, y_{\text{person}} \right\rangle, \quad (1);$$

and location vectors of the base station and the terminals 1 and 2 participating in sensing are

$$\boldsymbol{p}_0 = \left\langle x_0, y_0 \right\rangle, \quad (2);$$

and

$$\boldsymbol{p}_u = \left\langle x_u, y_u \right\rangle, u = 1, 2. \quad (3).$$

Based on the foregoing analysis, for the pedestrian-to-terminal 1 reflection path,

$$\frac{\boldsymbol{v}_{\text{person}} \cdot \left(\boldsymbol{p}_{\text{person}} - \boldsymbol{p}_1\right)}{\left\|\boldsymbol{p}_{\text{person}} - \boldsymbol{p}_1\right\|} = v_{\text{path1}}, \quad (4);$$

for the pedestrian-to-terminal 2 reflection path,

$$\frac{\boldsymbol{v}_{\text{person}} \cdot \left(\boldsymbol{p}_{\text{person}} - \boldsymbol{p}_2\right)}{\left\|\boldsymbol{p}_{\text{person}} - \boldsymbol{p}_2\right\|} = v_{\text{path2}}, \quad (5);$$

and for the pedestrian-to-base station reflection path,

$$\frac{\boldsymbol{v}_{\text{person}} \cdot \left( \boldsymbol{p}_{\text{person}} - \boldsymbol{p}_0 \right)}{\left\| \boldsymbol{p}_{\text{person}} - \boldsymbol{p}_0 \right\|} = v_{\text{path0}}, \quad (6).$$

In the foregoing equations (4) to (6), the locations of the base station, the terminal 1, and the terminal 2 are known, that is, the vectors $\boldsymbol{p}_0$, $\boldsymbol{p}_1$, and $\boldsymbol{p}_2$ are all known, and further, it is assumed that at the moment the pedestrian location vector $\boldsymbol{p}_{\text{person}}$ is also known. The total length change speeds $v_{\text{path}}^1$, $v_{\text{path}}^2$ of the reflection paths may be calculated by each terminal downlink received sensing signal or base station uplink received sensing signal based on multiple signal classification (Multiple Signal Classification, MUSIC) or other Doppler estimation algorithms. A relationship between the Doppler frequencies $f_{\text{d}}^1$, $f_{\text{d}}^2$ estimated by the terminal 1 and the terminal 2 and the total length change speeds $v_{\text{path}}^1$, $v_{\text{path}}^2$ of the reflection pathsis

$$\begin{cases} v_{\text{path}}^1 = v_{\text{path0}} + v_{\text{path1}} = \lambda f_{\text{d}}^1 \\ v_{\text{path}}^2 = v_{\text{path0}} + v_{\text{path2}} = \lambda f_{\text{d}}^2 \end{cases}, \quad (7).$$

$\lambda$ is a signal wavelength. The foregoing equations (equations (4) to (7)) have a total of 5 scalar unknowns, which are respectively radial speeds (change speeds) $v_{\text{path0}}$, $v_{\text{path1}}$, $v_{\text{path2}}$ of three reflection paths and two scalar unknowns (that is, two-dimensional coordinates of the speed vector) corresponding to $v_{\text{person}}$. In this regard, in this embodiment of this application, only the radial speed component, which has an impact on the reflection path length, is concerned, while the tangential speed component does not have an impact on the reflection path length and is therefore not considered. Therefore, equations (4) to (6) are substituted into equation (7) to obtain $v_{\text{person}}$.

Further, assuming that two adjacent times of measurement are sufficiently short in time (for example, 5 to 10 ms) relative to pedestrian motion, the pedestrian can be approximated as moving in a straight line at a uniform speed in this period, so that a location of the pedestrian at the next moment can be predicted. Therefore, for N consecutive times of measurement in time dimension, given a specific initial location, motion trajectory coordinates of the sensing target are obtained.

Embodiment 2

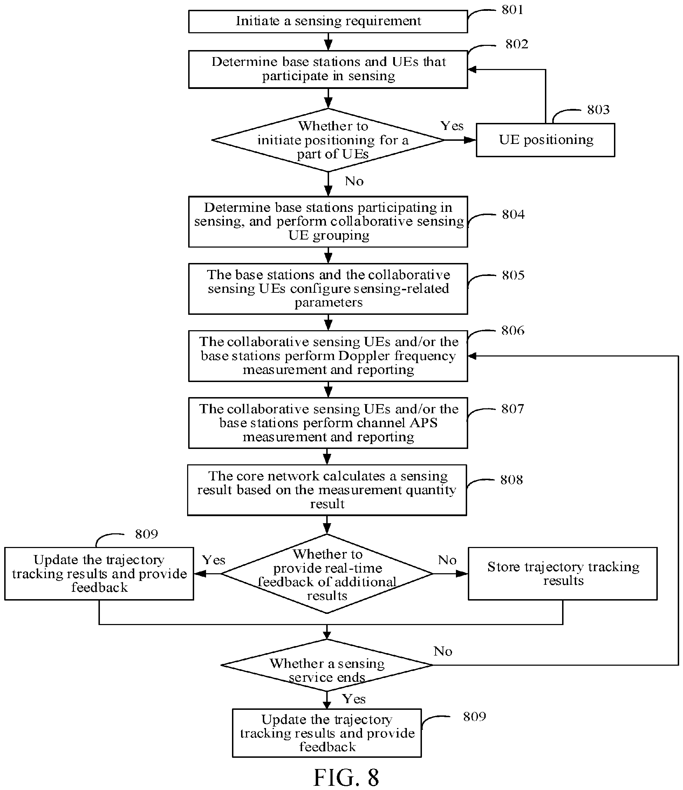

This embodiment is described by using trajectory tracking as an example. As shown in FIG. 8, the following steps are included:

Step 801: Initiate a sensing requirement.

The sensing requirement is sent to a core network (sensing network function or sensing network element). A sensing requirement initiator may be a UE, or a base station, or a sensing target itself, or a third-party application server other than an access network and a core network. The sensing requirement may include at least one of the following information:

a sensing area, for example, sensing area geographical coordinates or a sensing area length, width, or height distance;
a sensing target type, for example, car, motorcycle, or pedestrian, indicating a sensing target moving speed range and a reflected power level to wireless signal;
a sensing target UE indication, that is, whether the sensing target is a UE, where if the sensing target is a UE, information such as a corresponding UE ID may be attached;
sensing/integrated sensing and communication QoS, which may include: a sensing/integrated sensing and communication service type, a sensing/integrated sensing and communication priority, a requirement of a sensing resolution, a requirement of a sensing error, a sensing latency budget, a requirement of a maximum sensing range, a requirement of a continuous sensing capability, a requirement of a sensing update frequency, and the like, and communication QoS (during an integrated sensing and communication service), such as a communication latency budget and a false positive rate;

a minimum quantity requirement for UEs participating in collaborative sensing;

a quantity and density of sensing targets within a sensing area;

a sensing result feedback manner, for example, whether to feed back in real time or feed back after end of a sensing service;

a trajectory tracking initiation condition;

a trajectory tracking end condition, and the like.

The trajectory tracking initiation condition includes at least one of:

direct initiation by the sensing demanding party, not limited to time or place;

the sensing target arrives at a preset (physical) area based on other positioning technologies;

sensing target location information obtained by the sensing target based on other positioning technologies is received, where the location information may be sent by the sensing target or by the sensing demanding party; or

a preset sensing service start time is reached, for example, every Friday at 5:30 PM, trajectory tracking sensing is performed on a moving object (vehicle) at a specific intersection.

Step 802: Determine base stations and UEs that participate in sensing.

This step may be to determine base stations for sensing/integrated sensing and communication services and collaborative sensing UEs. The determining base stations participating in sensing and collaborative sensing UEs herein refers to determining base station and UE candidate sets within a wide range, equivalent to coarse grained base station and UE selection. Subsequently, in step 803, the sensing area may be divided into smaller areas and collaborative sensing UEs may be divided into groups, where each group of UEs are mainly responsible for one smaller area.

In this step, the core network (sensing network function or sensing network element) may determine the UEs and base stations participating in collaborative sensing based on sensing requirements and status information reported by the base stations and the UEs. For example, the following manners may be included:

Manner 1. The core network determines the base stations participating in the sensing service based on the sensing requirements and the status information reported by the base stations. There may be one or more base stations participating in sensing for a specific sensing area in which the sensing target is located.

Base station status information is to include at least one of the following information: base station sensing capability indication information (for example, maximum bandwidth and time-frequency resources of the base station that can be used to support sensing, a base station antenna quantity, a maximum sensing distance of the base station, a maximum communication coverage distance of the base station, base station location information, a base station location information determining method (or equivalently, information characterizing base station location accuracy), base station panel orientation and inclination angle information, beamforming configuration information, and the like).

Manner 2: The base stations participating in sensing and determined by the core network broadcast control information carrying sensing requirements and UE status information reporting requests for the sensing area. UEs in the coverage area of the base station report the UE status information.

The core network determines the UEs participating in the sensing service according to the sensing requirements and the status information reported by the UEs (including a UE communication & sensing status, UE sensing capability information, and other prior information (for example, a UE location)). Alternatively, the base station participating in sensing determines the UEs participating in the sensing service according to the status information reported by the UEs. Alternatively, the core network determines a part of the UEs participating in the sensing service according to the status information reported by the UEs, and the base station participating in sensing determines another part of the UEs participating in the sensing service according to the status information reported by the UEs. The UEs participating in collaborative sensing may also be other types of sensing nodes with equivalent functionality, such as small base stations.

The UE status information is to include: UE location information (that is, UE location coordinates), a UE location information determining method (or equivalently, information characterizing UE location accuracy), a UE motion status indication (that is, whether the UE is currently stationary or not), and UE panel orientation and inclination angle information.

Optionally, the UE status information may further include at least one of the following information: UE sensing capability indication information (for example, maximum bandwidth and time-frequency resources of the UE that can be used to support sensing, a UE antenna quantity, and a maximum sensing distance of the UE), a UE communication status indication (that is, whether a communication service is currently performed), a UE sensing status indication (for example, whether a current period supports collaborative sensing, a time period supporting collaborative sensing, and whether a sensing service is currently performed), UE beamforming configuration information, and the like.

The method of determining the UEs participating in collaborative sensing may be one of:

determining the UEs participating in collaborative sensing according to sensing area information in the sensing requirement, a UE motion status indication, and UE location information (that is, UE location coordinates);

determining the UEs participating in collaborative sensing according to sensing area information in the sensing requirement, a UE motion status indication, and UE location information (that is, UE location coordinates), and a UE location information determining method (or equivalently, information characterizing UE location accuracy);

determining the UEs participating in collaborative sensing according to sensing area information in the sensing requirement, a UE motion status indication, and UE sensing capability indication information;

determining the UEs participating in collaborative sensing according to sensing area information in the sensing requirement, a UE motion status indication, a UE communication status indication, and a UE sensing status indication; or

determining the UEs participating in collaborative sensing according to sensing area information in the sensing requirement and any at least one of the UE configuration information described above.

It should be noted that the accuracy of the sensing target trajectory tracking is closely related to the collaborative sensing UE location accuracy, and the network may select more distributed UEs in the sensing area to participate in the collaborative sensing, as much as possible to guarantee that the collaborative sensing UEs are distributed at different locations of the sensing target.

Manner 3: The base station reports determined information about the UEs participating in collaborative sensing to the core network (sensing network function or sensing network element). The information obtained by the latter is to include at least one of: collaborative sensing UE IDs, collaborative sensing UE location information, a collaborative sensing UE location information determining method (or equivalently, information characterizing UE location accuracy), a total quantity of collaborative sensing UEs in the sensing area, collaborative sensing UE status information, and the like.

Step 803: UE positioning.

This step may be that the core network determines whether to initiate positioning for a part of the UEs, where when the decision is yes, a UE positioning procedure is initiated. For example, through steps 801 and 802, there may be a situation where location information of a part of the UEs participating in collaborative sensing is missing. In this case, optionally, the core network initiates a positioning procedure for the part of the UEs to obtain UE location information. A positioning method used may be an LTE or NR positioning method, or another positioning method.

Upon completion of this part of UE positioning procedure and acquisition of this part of UE location information, the base station or the UE reports this part of UE location information, this part of UE positioning method (or equivalently, information characterizing the location accuracy of the UE), and other status information of this part of UEs to the core network as previously described. The core network finally determines all UEs participating in collaborative sensing.

It should be noted that it is assumed that the core network (sensing network function or sensing network element) has previously stored a unified map coordinate system, which is used for location information of all base stations, UEs, and other sensing terminals participating in sensing in the sensing area.

It should be noted that via steps 802 and 803, the core network (sensing network function or sensing network element) can determine weight coefficients of the UEs according to the status information reported by the base station and the UEs, that is, (measurement) confidences as sensing nodes. Optionally, the base station and the UE may also self-determine confidences according to own status information and report the confidences for reference or use by the core network.

Step 804: Determine base stations participating in sensing, and perform collaborative sensing UE grouping.

This step may be performed by the core network (sensing network function or sensing network element), and the ultimate goal is to allocate base stations participating in sensing and collaborative sensing UEs to sensing targets in the sensing area. The allocation of base stations and UEs may be allocation to the same target at different intervals of the trajectory or to different sensing targets. Specifically, the following manners may be included:

Manner 1. Sensing sub-area division of the sensing area. A sensing sub-area is a smaller physical area within a sensing area. The division (location and size) of the sensing sub-areas may be determined according to information about a quantity and density of sensing targets within the sensing area in the sensing requirement, and/or UE status information, such as a maximum sensing distance of the UE, and/or information about UEs participating in collaborative sensing within the sensing area grasped by the core network, and/or base station status information, such as a maximum sensing distance of the base station or a maximum communication coverage distance, and/or information about base stations participating in collaborative sensing within the sensing area grasped by the core network. If the foregoing information is not available, division may alternatively be performed according to a preset default value (for example, evenly divided or divided according to historical trajectory tracking service division results).

Optionally, the sensing sub-area may be divided in two levels, corresponding to sub-area division of the base station and the UE (respectively referred to as a base station sensing sub-area and a UE sensing sub-area below). The physical area sizes of the two levels of division may be different. Generally, a quantity of base stations is less than that of UEs, but a coverage area of the base stations is larger, to support a larger sensing distance. Therefore, the physical range of the base station sensing sub-area is typically larger than that of the UE sensing sub-area. One base station sensing sub-area may include one or more UE sensing sub-areas, and base station sensing sub-areas may be physically discontinuous. As shown in FIG. 5, a sensing sub-area corresponding to a base station 1 is a merged area of a UE sensing area 1 and a UE sensing area 2, that is, the sensing sub-area of the base station 1 includes both the UE sensing area 1 and the UE sensing area 2. A sensing sub-area of a base station 2 includes only a UE sensing sub-area 2. Further, there may be some degree of coincidence between the divided plurality of UE sensing sub-areas and plurality of base station sensing sub-areas.

Manner 2. Allocate base stations participating in sensing to each base station sensing sub-area, and allocate a group of collaborative sensing UEs to each UE sensing sub-area. The allocated UEs are from the base stations participating in sensing and the collaborative sensing UE set determined in step 802.

The allocation of collaborative sensing UEs to the UE sensing sub-area may be based on at least one of the following items in the UE status information: UE location information, UE sensing capability indication information, a UE sensing status indication, or a UE communication status indication. One sensing sub-area corresponds to one UE group, and a total quantity of collaborative sensing UEs within one UE group is at least two.

There may be one or more base stations participating in sensing within the sensing area, and there may be one or more base stations participating in sensing in one base station sensing sub-area. The allocation of the base stations participating in sensing to the base station sensing sub-area may be based on at least one of the following items in the base station status information: base station location information, base station sensing capability indication information, a base station sensing status indication, or a base station communication status indication.

The UE group is associated with the sensing base stations, and the association may be based on at least one of: a base station sensing sub-area division result, a UE sensing sub-area division result, one or more of the base station status information, or one or more of the UE status information. The core network issues an association result to the base stations participating in sensing. Optionally, the core network forwards the association result to the collaborative sensing UE group.

Alternatively, considering randomness of UE distribution, some sensing sub-areas may not have a sufficient quantity of collaborative sensing UEs. In this case, the base station may schedule adjacent UEs in other UE groups that meet the sensing requirement for collaborative sensing in a time division multiplexing (or frequency division multiplexing or code division multiplexing) manner. As shown in FIG. 5, black solid boxes represent sensing areas, blue dashed boxes represent three divided UE sensing sub-areas, and blue ovals represent different collaborative sensing UE groups. In the UE sensing sub-area 3, only UE 5 is available. In this case, the network may configure UE 3 to time division multiplexing sensing mode. To be specific, UE 3 performs trajectory tracking on the sensing target 2 with other collaborative sensing UEs in the UE group 2 in some slots, and performs trajectory tracking on the sensing target 3 in collaboration with UE 5 in the UE group 3 in some other non-overlapping slots. Similarly, if the same sensing target trajectory traverses both the UE sensing sub-area 2 and the UE sensing sub-area 3, the solution of multiplexing some UEs for collaborative sensing across sub-areas may be used. For areas without base station or UE coverage in the sensing area, the core network divides such areas into sensing blind areas.

It should be noted that the reasons for dividing the base station and UE sensing sub-areas and the sensing blind areas, group the sensing UEs, and associating UEs with base stations may include:

1: The sensing target is mobile, the range of movement may be larger than the maximum sensing range of the UE, or even the base station, requiring grouping of UEs within the area, for sensing of the target trajectory in different trajectory segments (sub-areas) with different UE groups and/or different base stations.
2: The sensing service may be to sense a plurality of targets in a large area, so that grouping of the UEs is to avoid scheduling collisions as much as possible, that is, to avoid that the same UE may be assigned to sensing different targets at the same time.
3: Generally, the initial location of the sensing target is not known (only confirmed to be in the sensing area), dividing the sub-areas facilitates the determining of the initial collaborative sensing UE grouping and the associated base stations participating in sensing, reducing the search range for the subsequent estimation of the target initial location, and reducing the complexity.

Step 805: The base stations and the collaborative sensing UEs configure sensing-related parameters.

After the network completes the collaborative sensing UE grouping, the sensing network function/sensing network element sends sensing/integrated sensing and communication signal/NR reference signal related configuration parameter information to the base stations participating in sensing. The configuration parameter information of the UEs may be conveyed by the sensing network function/sensing network element through NAS signaling, or the sensing/integrated sensing and communication signal configuration parameter information may be sent by the sensing network function/sensing network element first to the base stations participating in sensing and then forwarded by the base stations to the UEs.

The configuration parameter information includes at least one of:

a waveform, such as OFDM, SC-FDMA, OTFS, FMCW, or a pulse signal;

a subcarrier spacing: for example, a subcarrier spacing of an OFDM system is 30 kHz;

a bandwidth: this parameter determines a distance resolution of the sensing and can be determined according to sensing/integrated sensing and communication QoS in the sensing requirement;

burst duration: one burst refers to a set of sensing/integrated sensing and communication signals/NR reference signals sent continuously in time domain, where this parameter determines a sensing Doppler/speed resolution;

an intra-Burst signal time interval: It refers to a time interval of sensing/integrated sensing and communication signals/reference signals within one burst, where this parameter determines a maximum estimable range of the sensing Doppler/speed;

an inter-Burst time interval: It refers to a time interval of adjacent bursts before and after when a plurality of bursts need to be sent;

sending signal power, for example, taking a value every two dBm from -20 dBm to 23 dBm;

a signal format, such as SSB, PRS, DMRS, or SRS, or other pre-defined signals, a related sequence format, or other information;

a signal direction, such as a sensing signal direction or beam information;

a time resource, such as an index of a slot where the sensing signal is located or a symbol index of the slot, where time resources are divided into two types, one is a one-time time resource, for example, one symbol sends an omnidirectional first signal; the other is a non-disposable time resource, for example, a plurality of groups of periodic time resources or discontinuous time resources (which may include start time and end time), where each group of periodic time resources sends sensing signals in the same direction, and beam directions on different groups of periodic time resources are different;

a frequency resource, including a center frequency of a sensing signal, bandwidth, a RB or a subcarrier, Point A, a starting bandwidth location, or the like;

antennas/antenna port indexes and a quantity thereof, that is, antennas or antenna ports used for sensing/integrated sensing and communication signal/reference signal transceiving, and the quantity thereof; or

a quasi co-location QCLrelationship, for example, a sensing signal includes a plurality of resources, each resource is QCL with an SSB, and the QCL includes a Type A, B, C, or D.

It should be noted that after matching of the node parameters is completed, optionally, the core network sends a sensing start indication to at least one base station and one collaborative sensing packet in the sensing area according to the sensing requirements and self-grasped prior information.

Step 806: The collaborative sensing UEs and/or the base stations perform Doppler frequency measurement and reporting.

In this step, the collaborative sensing UEs (or the base stations) perform Doppler frequency measurement, where the measurement may use newly designed sensing signals or integrated sensing and communication signals, or reference signals currently used for NR, such as a primary synchronization signal (Primary synchronization signal, PSS) and a secondary synchronization signal (Secondary Synchronization Signal, SSS) in a downlink synchronization signal and physical broadcast channel block (Synchronization Signals (SS) and Physical Broadcast Channel Block, SSB), a DMRS carried in a PBCH, or a DL-PRS. The foregoing sensing signals or integrated sensing and communication signals, or reference signals are continuously distributed in time domain, the distribution density of which determines the maximum Doppler frequency range that the UEs can measure. The duration of the sensing/integrated sensing and communication signals/NR reference signals used determines the resolution of the Doppler frequency for the UEs. Based on the sensing/integrated sensing and communication signals/NR reference signals, the UEs obtain a channel estimate on the time-frequency resource where the signal is located. The obtained channel estimate includes Doppler information of the dynamic reflection path caused by movement of the sensing target. An algorithm used by the UE to estimate the Doppler frequency may be FFT (including zero-padded FFT), a MUSIC algorithm, an ESPRIT algorithm, a space-alternating generalized expectation-maximization (Space-Alternating Generalized Expectation-maximization, SAGE) algorithm, or the like. The identification of the dynamic reflection path can be achieved by power variation signature identification based on a Doppler peak/Doppler path. After obtaining a measurement result, each UE reports a measurement result of a Doppler frequency or a change speed $v^n_{path}$ of a total length of the dynamic reflection path (according to the foregoing equation (7)) calculated to the base station.

Optionally, the dynamic reflection path Doppler of the sensing target may also be measured by the base station based on uplink sensing/integrated sensing and communication signals/NR reference signals. If NR reference signals are used, SRS signals can be estimated for uplink channels or UL-SRS signals originally designed for NR positioning can be used. The base station can obtain measurement results of the Doppler frequency and the change speed $v_{path}$ (according to the foregoing equation (7)) of the total length of the reflection path of the plurality of UEs.

It should be note that there may be cases where a part of collaborative sensing UEs measure the Doppler frequency based on the downlink sensing/integrated sensing and communication signals/NR reference signals, and the other part of collaborative sensing UEs send uplink sensing/integrated sensing and communication signals/NR reference signals, and the base stations measure the Doppler frequency. In this case, the measurement results of the Doppler frequency of the downlink signal or the change speed $v^n_{\text{path}}$ (according to the foregoing equation (7)) of the total length of the dynamic reflection path are reported by the UE to the base stations, and then further forwarded by the base stations to the core network (sensing network function/sensing network element).

Optionally, when the Doppler frequency is measured, the UE records and saves a measurement timestamp, and reports the measurement timestamp to the base station along with the Doppler measurement result. If the conversion of the measurement quantity to the sensing result is performed at the core network (sensing network function or sensing network element), the base station reports the Doppler measurement result of each UE together with measurement timestamp information to the core network. If the measurement is periodic measurement (that is, two measurement time intervals of the vector are the same, for example, when periodic UL-SRSs or DL-PRSs are used), a measurement serial number and a measurement (sensing/integrated sensing and communication signals/NR reference signals) periodicity may be reported instead of the timestamp information.

It should be noted that trajectory tracking sensing involves measuring Doppler frequencies (or the change speed of the total length of the dynamic reflection path) for a plurality of times. The corresponding historical measurement results and corresponding timestamp information (or measurement serial numbers and periodicities) are reported to the core network (sensing network function or sensing network element) and then stored in the core network according to computational accuracy requirements for subsequent further computation and updating of the sensing target trajectory results.

Step 807: The collaborative sensing UEs and/or the base stations perform channel angle power spectrum (APS) measurement and reporting.

This step is performed simultaneously or time-shared with step 806. A quantity of UEs participating in channel APS measurement to locate the sensing target is greater than 1. When the quantity of UEs for APS measurement is 1, the base station side needs to perform APS measurement; and when the quantity of UEs for APS measurement is greater than 1, the base station side may not perform APS measurement. The angle power spectrum APS measurement method may be one of the following:

The collaborative sensing UEs perform channel APS measurement. In this case, the base stations do not participate in channel APS measurement, and only two or more UEs participating in collaborative sensing perform APS measurement. If the sensing/integrated sensing and communication signals/NR reference signals are sent through a downlink, each UE measures the AOA APS of the channel, and then each UE reports a measured AOA APS result to the base station and/or the core network.

The base stations participating in sensing perform channel APS measurement. In this case, the UEs collaboratively send only the uplink sensing/integrated sensing and communication signals/NR reference signals, and the AOA APS on the base station side and the AOD APS measurement results on the UE side are both obtained on the base station side.

The base stations participating in sensing and the collaborative sensing UEs, perform channel APS measurement, and the UEs report APS measurement results. This case is a combination of the two previously described cases, that is, the collaborative sensing UEs perform angle APS measurement on the UE side and the base stations participating in sensing perform angle APS measurement on the base station side. In this case, the total quantity of associated base stations and UEs is at least two, that is, at least one base station and one UE are required to complete the measurement. A base station associated with a UE refers to a base station that sends or receives sensing/integrated sensing and communication signals/NR reference signals with a collaborative sensing UE when performing trajectory tracking sensing.

The APS measurement for each node can be implemented based on own algorithms or can be obtained based on angle measurement methods and NR beam management methods in current NR positioning technologies:

If the APS measurement is implemented based on own algorithms, the base station and the UE may use FFT (including zero-padding FFT), commonly used spatial domain filters such as a Bartlett Beamformer (Bartlett Beamformer), MVDR, MUSIC, and refinement algorithms thereof based on received sensing/integrated sensing and communication/NR reference signals, or uplink/downlink channel estimates derived from the signals.

The angle measurement and NR beam management methods in LTR or NR positioning technologies may include one of the following:

1. For downlink base station side AOD APSs, downlink DL-PRS beams may be sent (beam sweeping), and the collaborative sensing UEs may receive the DL-PRSs and perform DL-PRS RSRP measurement. The difference from the NR procedure is that the UE does not only feed back the maximum RSRP beam index information to the base station, but feed back the corresponding RSRP measurement result for each beam, from which the base station obtains the channel AOD APS.

2. For downlink UE side AOA APSs, if the UE has a beam sweeping capability and s strong beam forming capability, after the DL-PRS-based downlink base station side AOD is determined, the base station side fixes the optimal downlink beam (that is, a base station downlink beam corresponding to the maximum DL-PRS RSRP measured by the UE side), and the UE performs beam sweeping reception and measures the DL-PRS RSRP to obtain the channel AOA APS.

3. For uplink UE side AOD APSs, if the UE has a beam sweeping capability and a strong beamforming capability, the UE sends uplink UR-SRS beams (beam sweeping) and the base stations participating in sensing receive the UL-SRS signals and perform UL-SRS RSRP measurement. The difference from the NR procedure is that the base station does not only indicate the maximum RSRP beam index information to the UE, but sends the corresponding RSRP measurement result for each beam, from which the UE obtains the channel AOD APS.

4. For uplink base station side AOA APSs, the base station indicates the UE to fix the uplink UL-SRS beam (that is, the UE uplink beam corresponding to the maximum UL-SRS RSRP measured by the base station side) based on the UL-SRS RSRP measurement result, and the base station performs beam sweeping reception, and measures the UL-SRS RSRP to obtain the channel AOA APS.

It should be note that there may be cases where a part of collaborative sensing UEs measure channel UE side AOA and/or base station side AOD APSs based on downlink sensing/integrated sensing and communication signals/NR reference signals; and the other part of collaborative sensing UEs send uplink sensing/integrated sensing and communication signals/NR reference signals, and the base stations measure channel UE side AOD and/or base station side AOA APSs. In this case, APS measurement results of the UEs need to be reported to the base station, and then further forwarded by the base stations to the core network (sensing network function/sensing network element).

It should be noted that through the APS measurement method described above, the overall APS of the channel including the dynamic reflection path of the sensing target is obtained, that is, the APS obtained has a plurality of spectrum peaks, including an LOS path spectrum peak, another static reflection path spectrum peak, and a sensing target dynamic reflection path spectrum peak. Generally, a static reflection path spectrum peak and a dynamic reflection path spectrum peak do not overlap.

Optionally, to suppress or avoid an impact of the LOS path and other static reflection paths on the conversion process from measurement quantities to sensing results (step 808), the corresponding spectrum peak of the dynamic reflection path may be identified and tracked in the trajectory tracking sensing process by detecting fluctuations in spectrum peak power, other pattern recognition methods, or machine learning methods based on results of a plurality of times of measurement performed in time domain using the APS measurement method described above, and then the interference energy other than the dynamic reflection path spectrum peak may be suppressed in subsequent measurement, where the APS reported is an APS result obtained after suppression of the interference energy.

Optionally, the UE may choose to report the whole channel APS results, or report APS results within a set angle range (obtained through historical APS measurement or dynamic reflection path spectrum peak identification) corresponding to the dynamic reflection path of the sensing target, reducing reporting overheads for the UE.

Optionally, the core network (sensing network function or sensing network element) obtains location coordinates of the currently measured sensing target based on the Doppler frequency measurement result (step 807) and the trajectory initial location estimation result (step 808), further obtains an angle of arrival (or angle of departure, depending on whether the measurement is uplink or downlink) of the sensing target to each collaborative sensing UE or the base station, and then issues the angle of arrival (or angle of departure) to each collaborative sensing UE. Based on the result, the UE feeds back an APS measurement value for the corresponding angle to the core network.

It should be noted that the core network forwards the location coordinates of the sensing target based on the Doppler estimate, or scaled to an angle value, to the UE, and the UE reports the APS value based on this value. In this case, dynamic reflection path spectrum peak identification is not required.

It should be noted that when measuring the APS, the UE needs to record and save a measurement timestamp, and report the timestamp to the base station along with the APS measurement result. If the conversion of the measurement quantity to the sensing result is performed at the core network (sensing network function or sensing network element), the base station reports the APS measurement result of each UE together with measurement timestamp information to the core network. If the measurement is periodic measurement (that is, two measurement time intervals of the vector are the same, for example, when periodic UL-SRSs or DL-PRSs are used), a measurement serial number and a measurement (sensing/integrated sensing and communication signals/NR reference signals) periodicity may be reported instead of the timestamp information.

It should be noted that trajectory tracking sensing involves measuring APSs for a plurality of times. The corresponding historical measurement results and corresponding timestamp information (or measurement serial numbers and periodicities) are reported to the core network (sensing network function or sensing network element) and then stored in the core network according to computational accuracy requirements for subsequent further computation and updating of the sensing target trajectory results.

Step 808: The core network calculates a sensing result based on the measurement quantity result.

This step may be understood as the conversion of the measurement quantity result to the sensing result. After each node completes channel APS measurement, the APS results can be stored locally or reported to upstream nodes. For example, the UE reports the measured APS to the base station, or the base station reports own measured APS and received UE APS measurement results to the core network (sensing network function or sensing network element), and the core network performs the calculation and conversion of the measurement quantity to the sensing result. Optionally, the base station may alternatively perform the calculation and conversion of the measurement quantity to the sensing result based on own measured APS and/or received UE APS measurement result, and own status information and UE status information stored locally or issued by the core network. For convenience of description, the nodes for the conversion of measurement quantities to sensing results are hereinafter collectively referred to as computing nodes (which may be core networks or base stations).

The conversion of measurement quantity results to sensing results may include steps A and B as follows.

Step A: Trajectory initial location determining. Generally, an accurate initial location of the sensing target is not known until the trajectory tracking service proceeds. According to different cases, the accurate initial location of the sensing target may be specifically determined in one of the following manners:

Manner 1: The sensing target is not required to be a UE, and according to the measurement results of step 806 and step 807, an initial location where the trajectory of the sensing target is accurate is determined. If the computation of the trajectory initial location is done at the core network (sensing network function or sensing network element) and the APS measurement result of step 807 has been reported to the core network, the core network (sensing network function or sensing network element) may determine an approximate search range of the sensing target based on prior information of the sensing target, where the prior information of the sensing target includes at least one of:

an approximate area of the initial location of the sensing target provided by a sensing service demanding party, or another third party (other than a core network side or an access network side);
an approximate area determined when a sensing node performs step 807 for the first time;
a location where the sensing target trajectory ends for a previous time in an area in which the sensing target is located;
sensing area map information and obstacle information pre-stored by the network;
a sensing area sensing target initial location probability map pre-stored by the network;
location information of each UE in a collaborative sensing UE group (it can be learned from the above that an area in which the UE group is located is typically smaller relative to the overall sensing area); or
an NR location result of the sensing target (if the sensing target is a UE).

After determining the approximate search range of the initial location of the sensing target, the computing node divides the search range into several search grid points. The size of the grid point is synthetically determined according to sensing capabilities of each collaborative sensing UE (for example, a quantity of antennas for UE angle measurement and sensing signal bandwidth).

Assuming, in turn, that the initial location of the sensing target is the divided grid points, according to the change speed $v_{path}$ of the dynamic reflection path of the sensing target in step 806, the speed vector $v_{obj}$ of the sensing target is obtained based on equations (4) to (7) (where $v_{obj}$ corresponds to $v_{person}$ in equations (4) to (6)).

With reference to the speed vector $v_{obj}$ of the sensing target, the measurement timestamp information or the measurement periodicity, and the grid point locations described above, location coordinates of the sensing target can be obtained each time the measurement at step 806 is performed. Based on the location coordinates of the sensing target, location coordinates of the base stations participating in sensing and/or location coordinates of the collaborative sensing UEs, an angle (AOD or AOA) of the dynamic reflection path at the base stations participating in sensing side and/or the collaborative sensing UEs at the location coordinates of the sensing target is obtained.

The angle value is substituted into the corresponding formula for calculating the location confidence in the embodiment shown in FIG. 3, to obtain the initial location confidence $C_{trace}^{i}$ of the sensing target at the grid point. The computing node repeats the foregoing calculation for all grid points, and determines location coordinates of a grid point with a largest initial location confidence $C_{trace}^{i}$ as the trajectory initial location of the sensing target. Step 808 may be performed immediately after steps 806 and 807 are performed for the first time, or may be performed after steps 806 and 807 are performed for a plurality of times, and in this case, historical measurement results of steps 806 and 807 need to be saved for use in step 808.

Manner 2: The sensing target is not required to be a UE, and the base stations participating in sensing or the collaborative sensing UEs determine the initial location of the sensing target based on spontaneous self-collected sensing signals. In this case, the node (one of the base stations or the collaborative sensing UEs) performing the target initial location sensing needs to temporarily occupy more time domain resources (that is, the density and the quantity of repetitions of the sensing/integrated sensing and communication signals/reference signals in time domain and the length of time covered need to be increased), frequency domain resources (that is, the distribution density of the sensing/integrated sensing and communication signals/reference signals in frequency domain and the frequency range covered need to be increased), and spatial domain resources (that is, the quantity of antennas used for sensing and the antenna array aperture need to be increased).

The determining of the specific sensing node is determined by the core network (sensing network function or sensing network element) based on the sensing capability indication information reported by each node (refer to step 802). If the spontaneous self-collecting sensing node is a base station, the core network indicates the base station to perform spontaneous self-collecting sensing signal sensing, a specific algorithm is implemented by the base station, and the base station reports obtained sensing target location information to the core network; and if the spontaneous self-collecting sensing node is a collaborative sensing UE, the core network indicates the UE with the strongest sensing capability for spontaneous self-collecting sensing signal sensing, a specific algorithm is implemented by the UE, and the UE reports obtained sensing target location information to the core network.

The above procedure may be performed by only one base station or one UE, by one base station and one or more UEs with results being reported separately, or by only a plurality of UEs with results being reported separately. The core network (sensing network function or sensing network element) then determines the final initial location coordinates of the sensing target synthetically.

Manner 3: The sensing target is required to be a UE, and the initial location of the sensing target is determined based on an NR positioning method. Whether the sensing target is a UE is indicated in a sensing requirement. When the sensing target is also a UE, the core network may determine to initiate sensing target positioning.

Manner 4: the sensing target is required to be a UE, and the initial location is determined by GPS; or the sensing target is not required to be a UE, and the initial location is determined by such methods as Bluetooth or UWB.

It should be noted that any two or three of the methods for determining the initial location of the sensing target may be used in combination to further improve the sensing accuracy.

Step B: Calculate a current location of the sensing target based on a set confidence criterion. The methods of step A above may all be performed after the first measurement for the trajectory tracking sensing (steps 806 and 807 are performed for the first time). In addition, for Manner 1 provided in this embodiment of this application, the core network (sensing network function or sensing network element) may re-retrieve the stored Doppler frequency (or the dynamic reflection path length change speed) and historical channel APS measurement results during a plurality of times of subsequent measurement to correct and update the estimated trajectory initial location and overall trajectory coordinates.

The current location of the sensing target is jointly determined based on the initial location determined in step A, historically calculated one or more speed vectors $v_{obj}$ of the sensing target, and the currently measured APS. Strictly speaking, each time APS measurement is added, the trajectory is updated and the current location coordinates of the sensing target are determined.

Further, for the current measurement, location coordinates of the sensing target at a next measurement moment can be predicted based on the location of the sensing target and a speed vector $v_{obj}$ of the sensing target currently calculated.

The confidence criterion may be specifically referred to the location confidence and the initial location confidence of the sensing target, and weight coefficients of various collaborative sensing UEs described in the embodiment shown in FIG. 3. The weight coefficients of the collaborative sensing UEs may be a fixed value throughout the trajectory tracking sensing service process or may be dynamically adjusted. The case of dynamic adjustment arises when a reconfiguration needs to be sent for sensing resources (including time, frequency and spatial domain resources) of the collaborative sensing UEs, or the sensing target enters or leaves an optimal sensing range of the collaborative sensing UEs. The adjustment of the weight coefficients (confidence) of the collaborative sensing UEs is determined and done by the core network.

Step 809: Forward sensing results.

This step may be that the trajectory tracking sensing service corresponds to a continuous period of time, and the sensing results may be a real-time feedback according to the sensing requirement, or may be a whole feedback after the trajectory tracking sensing is completed. After the sensing service starts, and after steps 801 to 805 are performed, steps 806 to 808 need to be iteratively performed to generate and output the current location of the sensing target (and the predicted location of the sensing target at the next moment).

The trajectory tracking ending condition may include at least one of:

the sensing demanding party initiates a sensing service stop request;
a sensing service specified time is reached;

a predetermined quantity of times of measurement of a sensing service is reached;
the sensing target stops moving, and a stop time reaches a preset time threshold;
the sensing target arrives at or leaves a preset (physical) area; or
the UEs participating in the collaborative sensing cannot continue to provide the collaborative sensing service, and collaborative sensing conditions of all the UEs in the sensing area are not available.

If real-time feedback of the trajectory tracking sensing results is required, the computing node sends the current latest trajectory tracking sensing results (either the current sensing target location results or results including historical trajectories of the sensing target) to the sensing demanding party through the core network each time step 808 is completed. If the overall trajectory results are fed back after the completion of the trajectory tracking sensing service, the core network temporarily stores the historical trajectory tracking results and sends the results to the sensing demanding party at the end of the sensing service.

It should be noted that the embodiment shown in FIG. 8 is only an example of one of the sensing positioning methods according to embodiments of this application, and that the network needs to trigger some additional processing flows in view of the fact that the base stations participating in sensing and the collaborative sensing UEs are not necessarily guaranteed to maintain stable availability throughout the trajectory tracking sensing service. Stable availability means that both the base stations participating in sensing and the collaborative sensing UEs meet the conditions required for the collaborative sensing throughout the trajectory tracking process, for example, the UEs remain stationary, or the base stations and/or the UEs maintain stable sensing capabilities. For this case, supplementary explanations can be made by the following embodiments 3, 4, and 5.

Embodiment 3:

This embodiment mainly describes switching of a collaborative sensing UE group and/or base stations participating in sensing, where the switching may be triggered by target movement or environmental changes.

As can be learned from the detailed description of the trajectory tracking procedure, because the object of the sensing service proceeding process moves, the target may move out of the sensing range of the original collaborative sensing UE group. In this case, the network needs to allocate a new collaborative sensing UE group and even new base stations participating in sensing to the sensing target. The new collaborative sensing UE group may include some of the UEs within the original collaborative sensing UE group. When new sensing base stations are allocated, a new collaborative sensing UE group may be allocated simultaneously, or the original collaborative sensing UE group may be used, that is, the core network re-associates the collaborative sensing UEs with the base stations.

The condition triggering switching of the base stations participating in sensing may be at least one of the following:

it is discovered based on the trajectory sensing result (the trajectory including the location) of the current sensing target that the sensing target is about to leave or has left a sensing sub-area corresponding to the current base station;
it is discovered based on the trajectory sensing result of the current sensing target (the trajectory including the location) that a distance between the sensing target and at least one base station in the base stations currently participating in sensing exceeds a maximum sensing distance of the base station, and the remaining base stations in the group are insufficient to provide a sensing result that meets the predetermined sensing QoS;
it is discovered based on the current channel APS measurement result that the sensing target spectrum peak power measured by the base station or reported by all the associated UEs, or other measurement quantity results related to the channel APS measurement (for example, received power, RSRP, and the like of uplink or downlink sensing/integrated sensing and communication signals/NR signals) are lower than a preset threshold;
it is discovered based on the current Doppler frequency measurement result that the sensing target spectrum peak power measured by the base station or reported by all the associated UEs, or other measurement quantity results related to the Doppler frequency measurement (for example, received power, RSRP, and the like of uplink or downlink sensing/integrated sensing and communication signals/NR signals) are lower than a preset threshold; or
it is discovered based on the trajectory sensing result of the current sensing target that a span of a trajectory physical range of the sensing target exceeds a preset threshold.

It should be noted that in this embodiment of this application, in addition to a common case where there is only one base station in a base station sensing sub-area, there may be a case where a quantity of sensing UEs is 1 and a quantity of base stations participating in sensing is 2.

The condition triggering switching of the collaborative sensing UE group may include at least one of the following:

it is discovered based on the trajectory sensing result (the trajectory including the location) of the current sensing target that the sensing target is about to leave or has left a sensing sub-area corresponding to the collaborative sensing UE group;

it is discovered based on the trajectory sensing result of the current sensing target (the trajectory including the location) that a distance between the sensing target and at least one UE in the collaborative sensing UE group exceeds a maximum sensing distance of the UE, and the remaining UEs in the group are insufficient to provide a sensing result that meets the predetermined sensing QoS;

it is discovered based on the current channel APS measurement result that the sensing target spectrum peak power of at least one UE in the collaborative sensing UE group, or other measurement quantity results related to the channel APS measurement (for example, received power, RSRP, and the like of uplink or downlink sensing/integrated sensing and communication signals/NR signals) are lower than a preset threshold;

it is discovered based on the current Doppler frequency measurement result that the sensing target spectrum peak power of at least one UE in the collaborative sensing UE group, or other measurement quantity results related to the Doppler frequency measurement (for example, received power, RSRP, and the like of uplink or downlink sensing/integrated sensing and communication signals/NR signals) are lower than a preset threshold;

it is discovered based on the trajectory sensing result of the current sensing target that a span of a trajectory physical range of the sensing target exceeds a preset threshold; or

switching of a base station participating in sensing is triggered.

A procedure of switching a base station participating in sensing may include:

(1) If the switching condition is met, switching of the base station participating in sensing is triggered.

If the node detecting the trigger condition is the original sensing base station (as described in the third condition and the fourth condition above), the original base station sends a sensing base station switching request to the core network.

The node detecting the trigger condition may alternatively be the core network (as described in the first, second and fifth conditions above).

(2) Manner 1: The core network determines a new base station participating in sensing (optionally, steps 802, 804, and 805 may be performed), and sends a sensing switching preparation indication to the new sensing base station. Alternatively,

Manner 2: The core network determines a new base station participating in sensing (optionally, steps 802, 804, and 805 may be performed) and sends an ID of the new sensing base station to the original sensing base station, and the original sensing base station sends a sensing switching preparation indication to the new sensing base station.

(3) Manner 1: The new sensing base station and the collaborative sensing UE group prepare for switching, and after preparation, report a switching preparation success indication to the core network.

Manner 2: The new sensing base station and the collaborative sensing UE group prepare for switching, and after preparation, send a switching preparation success indication to the original sensing base station and the core network.

After receiving the witching preparation success indication, the core network sends a sensing start indication to the new sensing base station and an associated collaborative sensing UE group.

(4) The new sensing base station and the collaborative sensing UE group perform sensing, and report sensing measurement quantity results to the core network (perform steps 806 and 807 above). Optionally, at least one of the new sensing base station and the new collaborative sensing UE group sends a sensing start indication response to the core network.

(5) After receiving the sensing measurement quantity results or the sensing start indication response reported by the new collaborative sensing UE group, the core network sends a sensing stop indication to some or all of the UEs in the original collaborative sensing UE group (which may be sent through NAS signaling, or via the base station).

(6) After some or all of the UEs in the current collaborative sensing UE group receive the sensing stop indication, the sensing measurement is stopped and the switching is completed.

A specific collaborative sensing UE group switching procedure may include:

(1) If the switching condition is met, switching of the collaborative sensing UE group is triggered.

If the node detecting the trigger condition is a collaborative sensing UE and/or a base station participating in sensing (as described in the third condition and the fourth condition above), the corresponding UE or base station sends a sensing UE group switching request to the core network.

The node detecting the trigger condition may alternatively be the core network (as described in the first, second and fifth conditions above).

(2) The core network determines a new collaborative sensing UE group (optionally, steps 802 to 805 may be performed) and sends a sensing start indication to the new collaborative sensing UE group (may be sent through NAS signaling, or via the base station).

(3) The new collaborative sensing UE group performs collaborative sensing, and reports sensing measurement quantity results (perform steps 806 and 807 above). Optionally, the UEs within the new collaborative sensing UE group send a sensing start indication response to the core network.

(4) After receiving the sensing measurement quantity results or the sensing start indication response reported by the new collaborative sensing UE group, the core network sends a sensing stop indication to some or all of the UEs in the original collaborative sensing UE group (which may be sent through NAS signaling, or via the base station).

(5) After some or all of the UEs in the current collaborative sensing UE group receive the sensing stop indication, the sensing measurement is stopped and the switching is completed.

It should be noted that if the sensing target enters a sensing blind area (based on the results of the trajectory tracking and the results of the blind area division at step 804), end of the trajectory tracking sensing service may be triggered, or another trajectory tracking sensing process (for example, trajectory tracking based on spontaneous self-collection of sensing signals by the sensing node, or NR continuous positioning, or GPS/Bluetooth/UWB based trajectory tracking) is switched.

Embodiment 4:

This embodiment mainly describes failure and supplement of collaborative sensing UEs, where the failure and supplement may be triggered due to own causes of the UEs.

During the trajectory tracking sensing service, the collaborative sensing UEs may not continue to support collaborative sensing due to own causes of the UEs. In this case, the network needs to make a failure decision on the collaborative sensing UEs and remove failed collaborative sensing UEs, and also needs UE supplement on the current collaborative sensing UE group if necessary.

A triggering condition for failure of a collaborative sensing UE may include at least one of the following:

the collaborative sensing UE moves, and the prerequisite assumptions described in embodiments of this application are no longer met;
the collaborative sensing UE is interrupted by a service of higher priority, and cannot continue to support collaborative sensing;
sensing/integrated sensing and communication resources of the collaborative sensing UE are limited, and collaborative sensing capability requirements cannot be met;
the collaborative sensing UE actively initiates an assistance sensing interruption request; or
if the UE quantity of the original collaborative sensing UE group does not meet a minimum quantity requirement after the UE fails, UE supplement is required for the collaborative sensing group; and optionally, the network may also perform UE supplement if there are new UEs available for collaborative sensing in the sensing area.

The movement of the UE may be detected by a device-based positioning method, such as LTE positioning, NR positioning, GPS, Bluetooth, or UWB.

A specific collaborative sensing UE failure and supplement procedure may be:

(1) If the failure condition is met, the relevant UE sends a sensing UE failure indication to the core network.
(2) The core network receives the sensing UE failure indication and determines a new available collaborative sensing UE (optionally, steps 802 to 805 may be performed); and sends a sensing stop indication to the failed UE.
(3) If a new available collaborative sensing UE is currently present and needs to be supplemented, the core network sends a sensing start indication to the newly determined collaborative sensing UE (which may be sent through NAS signaling, or via the base station).

Embodiment 5:

This embodiment mainly describes measurement confidence adjustment for the collaborative sensing UEs and/or the base stations.

The measurement confidence of the collaborative sensing UE in the sensing service process is reflected by the weight coefficients in the corresponding equations in the embodiment shown in FIG. 3. The measurement confidence of the UE affects the accuracy of the final composite result, and to obtain a more accurate trajectory tracking result, the corresponding weight coefficients may be dynamically adjusted.

The condition under which the weight coefficients change may be:

Available sensing resources of the collaborative sensing UEs may change. For example, the UEs obtain more resources (or less resources) in time domain (corresponding to more symbols that can be occupied in time domain for sensing/integrated sensing and communication signal/NR reference signal transmission)/frequency domain (corresponding to larger sensing/integrated sensing and communication bandwidth)/spatial domain (corresponding to more antenna ports/quantity of antennas for sensing/integrated sensing and communication) during the sensing service, and the sensing capabilities of the UEs change.

In this embodiment of this application, the accuracy of the measurement quantities of the collaborative sensing UEs is related to the accuracy of the locations of the collaborative sensing UEs, and if the collaborative sensing UEs update the locations using a more precise positioning method, the UE measurement confidence also needs to be adjusted.

In this embodiment of this application, the accuracy of the measurement quantities of the collaborative sensing UE is related to the location of the sensing target. For example, for Doppler frequency measurement, the measurement accuracy is higher when a distance between the sensing target and the base station or each collaborative sensing UE satisfies a far-field condition. For APS measurement, the measurement accuracy is higher when the sensing target faces a multi-antenna panel of the UE.

The measurement quantity accuracy of the collaborative sensing UEs is also related to a signal to noise ratio (Signal to Noise Ratio, SNR) at the collaborative sensing UE side. For example, a higher UE-measured SNR indicates higher measurement accuracy, and corresponding a higher measurement confidence.

Based on the definition of the corresponding equations in the embodiment shown in FIG. 3, the measurement confidence of each UE in the collaborative sensing UE group needs to ensure that the location confidence of the sensing target is maintained within a preset range throughout the trajectory tracking process. The quantity of UEs in the group may change when the cases of Embodiment 1 and Embodiment 2 occur, and the weight coefficients corresponding to all UEs in the group need to be adjusted as a whole.

The measurement confidence may be adjusted by each sensing node reporting updated weight coefficient recommended values to the core network, or may be self-adjusted by the core network.

Embodiment 6:

This embodiment mainly describes use with satellite positioning, a third generation partnership project (3rd Generation Partnership Project, 3GPP) positioning technology, improving positioning and trajectory tracking.

The biggest problem with existing outdoor GPS positioning and trajectory tracking is that it is easily occluded by tall buildings, resulting in weak GPS signals, which in turn results in less accurate partial area positioning or partial road trajectory tracking, and even impossible GPS positioning and trajectory tracking services. In addition, the 3GPP positioning scheme is limited by large outdoor macro station deployment intervals, and positioning accuracy is also limited. In this embodiment of this application, a GPS location before occlusion may be used as an initial location to enable continuous positioning and trajectory tracking of a sensing target in an area with GPS signal occlusion or poor GPS signal coverage as a complement to existing trajectory tracking methods.

Specifically, it is generally considered that there is still a sufficiently dense distribution of base stations and UEs in an area with GPS signal occlusion or poor GPS signal coverage. When the sensing target is about to enter the area with GPS signal occlusion or poor GPS signal coverage, the trajectory tracking sensing of the method described in this patent may be switched to. In this case, GPS positioning information of the sensing target may be used as initial location information of trajectory tracking of the method. When the sensing target moves out of the area with poor GPS signal coverage, GPS trajectory tracking may be switched back. By using this method, the overall performance of the trajectory tracking service is improved.

Embodiments of this application provide a trajectory tracking sensing method based on inter-device collaboration other than LTE positioning and NR positioning. According to this method, device-free trajectory sensing of the sensing target is implemented based on Doppler and angle power spectrum measurement by a plurality of UEs or base stations by using stationary UEs or base stations around the sensing target. The specific implementation steps of the sensing method are provided; the necessary signaling interaction processes between the collaborative sensing UEs, the base stations, and the core network sensing network function are provided; the definitions of the measurement quantity and the sensing result confidence in this method are provided, and the use method is described in conjunction with the embodiments; and the switching methods and procedures of the collaborative UEs and the collaborative base stations are provided.

The target positioning sensing method according to embodiments of this application may be performed by a target positioning sensing apparatus. In this embodiment of this application, the target positioning sensing method provided in embodiments of this application is described by taking a transmission determining method performed by the target positioning sensing apparatus as an example.

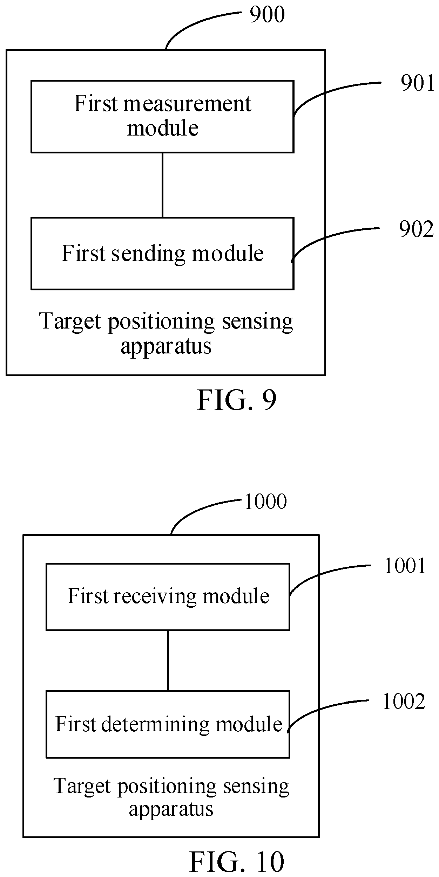

Refer to FIG. 9. FIG. 9 is a structural diagram of a target positioning sensing apparatus according to an embodiment of this application. As shown in FIG. 9, the target positioning sensing apparatus includes:

a first measurement module 901, configured to perform sensing measurement on a sensing target, to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to a first device; and

a first sending module 902, configured to send the first measurement quantity result, where the first measurement quantity result is used for determining a positioning sensing result of the sensing target.

Optionally, the first device includes:
a terminal, a network side device, or a dedicated sensing device for performing sensing measurement.
The second device includes:
a terminal, a network side device, or a dedicated sensing device for sending the first signal.
Optionally, the positioning sensing result includes at least one of:

a speed of the sensing target;
a speed direction of the sensing target;
a trajectory of the sensing target; or
a future predicted location of the sensing target.

Optionally, the first signal includes one of:
a dedicated sensing signal, an integrated sensing and communication signal, or an LTE or NR reference signal.
Optionally, the sending the first measurement quantity result includes:

sending the first measurement quantity result and a first timestamp, where the first timestamp is a timestamp corresponding to the first measurement quantity result; or
sending the first measurement quantity result and a first serial number in a case that the sensing measurement is periodic measurement, where the first serial number is a serial number corresponding to the first measurement quantity result.

Optionally, the sending the first measurement quantity result includes:
sending a plurality of first measurement quantity results, where the plurality of first measurement quantity results are measurement quantities obtained through a plurality of times of sensing measurement.
Optionally, the apparatus further includes:

a second measurement module, configured to perform angle power spectrum APS measurement on a wireless channel in which the sensing target is located, to obtain a second measurement quantity result of a second measurement quantity, where the second measurement quantity includes: an angle of arrival APS and/or an angle of departure APS of the channel; and
a second sending module, configured to send the second measurement quantity result, where the second measurement quantity result is used for determining at least one of an initial location and the trajectory of the sensing target.

Optionally, the performing APS measurement on a wireless channel in which the sensing target is located, to obtain a second measurement quantity result of a second measurement quantity includes at least one of:

in a case that the second measurement quantity includes the angle of departure APS, and the first device is a network side device, performing downlink beam sweeping, receiving a first beam sweeping measurement result sent by a terminal, and determining the angle of departure APS according to the first beam sweeping measurement result, where the beam sweeping measurement result includes reference signal received power RSRP measurement results corresponding to a plurality of beams;
in a case that the second measurement quantity includes the angle of arrival APS, and the first device is a terminal, measuring an RSRP measurement result of a fixed downlink beam, and determining the angle of arrival APS according to the RSRP measurement result of the fixed downlink beam;
in a case that the second measurement quantity includes the angle of departure APS, and the first device is a terminal, performing uplink beam sweeping, receiving a second beam sweeping measurement result sent by a network side device, and determining the angle of departure APS according to the second beam sweeping measurement result, where the beam sweeping measurement result includes RSRP measurement results corresponding to a plurality of beams; or
in a case that the second measurement quantity includes the angle of arrival APS, and the first device is a network side device, measuring, by the first device, an RSRP measurement result of a fixed uplink beam, and determining the angle of arrival APS according to the RSRP measurement result of the fixed uplink beam.

Optionally, the apparatus further includes:

a suppression module, configured to suppress interference energy other than a dynamic reflection path spectrum peak in the second measurement quantity result, to obtain the suppressed second measurement quantity result; and
the sending the second measurement quantity result includes:
sending the suppressed second measurement quantity result.

Optionally, the sending the second measurement quantity result includes:

sending the second measurement quantity result and a second timestamp, where the second timestamp is a timestamp corresponding to the second measurement quantity result; or
sending the second measurement quantity result and a second serial number in a case that the APS measurement is periodic measurement, where the second serial number is a serial number corresponding to the second measurement quantity result.

Optionally, the second measurement quantity includes one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

Optionally, the apparatus further includes:

a first receiving module, configured to receive angle information sent by a third device, where the angle information includes an angle of arrival or an angle of departure from the sensing target to the first device; and
the performing APS measurement on the sensing target, to obtain the second measurement quantity includes:

performing APS measurement of the angle of arrival or the angle of departure on the sensing target to obtain the second measurement quantity, where
the third device is a device configured to calculate the positioning sensing result of the sensing target.

Optionally, the third device includes one of:
a sensing network function entity, a core network device, a network side device, or a terminal.
Optionally, the apparatus further includes:
a second receiving module, configured to receive parameter configuration information of the sensing measurement.
Optionally, the parameter configuration information includes at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, where
one Burst refers to a set of sensing signals/integrated sensing and communication signals/reference signals sent continuously in time domain; and
the antenna information includes at least one of:
an antenna index, an antenna port index, or an antenna quantity.

Optionally, the apparatus further includes:
a reporting module, configured to report device information of the first device to a third device, where the device information is used by the third device to determine whether the first device participates in collaborative sensing.
Optionally, the device information includes at least one of:
status information, sensing capability information, or prior information.
Optionally, the status information includes at least one of:
location information, a location information determining manner, motion status information, panel orientation information, panel inclination angle information, communication status information, sensing status information, or beamforming configuration information.
Optionally, the reporting device information of the first device to a third device includes at least one of:

in a case that the first device is a terminal, reporting the device information of the first device to the third device through a network side device; or

in a case that the first device is a network side device, reporting the device information of the first device to the third device, and reporting device information of a terminal to the third device, where the device information of the terminal is used by the third device to determine whether the terminal participates in collaborative sensing of the sensing target.

The target positioning sensing apparatus described above can improve positioning capabilities of the communication system.

The target positioning sensing apparatus in this embodiment of this application may be an electronic device, such as an electronic device with an operating system, or a component in an electronic device, such as an integrated circuit or a chip. The electronic device may be a terminal or another device other than a terminal. For example, the terminal may include, but is not limited to, the types of terminals listed in embodiments of this application, and the another device may be a server, a network attached storage (Network Attached Storage, NAS), or the like. This is not specifically limited in this embodiment of this application.

The target positioning sensing apparatus provided in this embodiment of this application can implement the processes implemented in the method embodiment shown in FIG. 2, and achieve the same technical effects. To avoid repetition, details are not described herein again.

Refer to FIG. 10. FIG. 10 is a structural diagram of another target positioning sensing apparatus according to an embodiment of this application. As shown in FIG. 10, the target positioning sensing apparatus includes:

a first receiving module 1001, configured to receive first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and

a first determining module 1002, configured to determine a positioning sensing result of the sensing target based on the first measurement quantity results sent by the at least two first devices.

Optionally, the first device includes:

a terminal, a network side device, or a dedicated sensing device for performing sensing measurement.

The second device includes:

a terminal, a network side device, or a dedicated sensing device for sending the first signal.

Optionally, the positioning sensing result includes at least one of:

a speed of the sensing target;
a speed direction of the sensing target;
a trajectory of the sensing target; or
a future predicted location of the sensing target.

Optionally, the first signal includes one of:

a dedicated sensing signal, an integrated sensing and communication signal, or an LTE or NR reference signal.

Optionally, the receiving first measurement quantity results sent by at least two first devices includes:

receiving the first measurement quantity results and first timestamps sent by the at least two first devices, where the first timestamps are timestamps corresponding to the first measurement quantity results; or

receiving the first measurement quantity results and first serial numbers sent by the at least two first devices in a case that the sensing measurement is periodic measurement, where the first serial numbers are serial numbers corresponding to the first measurement quantity results.

The determining a positioning sensing result of the sensing target based on the first measurement quantity results sent by the at least two first devices includes:

determining the positioning sensing result of the sensing target based on the first measurement quantity results and the first timestamps sent by the at least two first devices; or

determining the positioning sensing result of the sensing target based on the first measurement quantity results and the first serial numbers sent by the at least two first devices.

Optionally, the receiving first measurement quantity results sent by at least two first devices includes:

receiving a plurality of first measurement quantity results sent by the at least two first devices, where the plurality of first measurement quantity results are measurement quantities obtained through a plurality of times of sensing measurement.

Optionally, the apparatus further includes:

a second receiving module, configured to receive second measurement quantity results sent by at least two second devices, where the second measurement quantity results are results of a second measurement quantity that are obtained by the second devices by performing angle power spectrum APS measurement on a wireless channel in which the sensing target is located, and the second measurement quantity includes: an angle of arrival APS and/or an angle of departure APS of the channel; and

the determining a positioning sensing result of the sensing target includes:

determining an initial location of the sensing target;

determining a current speed and a speed direction of the sensing target according to the initial location and the first measurement quantity results;

determining a current location of the sensing target according to the initial location, the first measurement quantity results, and the second measurement quantity results; and

determining a trajectory of the sensing target based on the initial location, the current speed, the speed direction, and the current location.

Optionally, the initial location of the sensing target includes:

in a case that the sensing target is a terminal, an initial location of the sensing target determined based on a terminal positioning technology; or

in a case that the sensing target is not a terminal, an initial location of the sensing target determined based on a device-free device-free technology.

Optionally, the initial location of the sensing target determined based on the device-free technology includes:

an initial location of the sensing target determined based on echolocation; or

an initial location of the sensing target determined based on angle information of the sensing target.

Optionally, the initial location of the sensing target determined based on the angle information of the sensing target is determined in the following manner:

calculating, by the third device, a confidence of each candidate location in a plurality of candidate locations in an initial location search area, where the confidence of each candidate location is determined based on angle information of at least two first devices to the sensing target; and

determining, by the third device, a location with a greatest confidence in the plurality of candidate locations as the initial location of the sensing target.

Optionally, the calculating, by the third device, a confidence of each candidate location in a plurality of candidate locations in an initial location search area includes:

determining an estimated motion trajectory of the sensing target according to the speed and the speed direction of the sensing target;

assuming that the initial location of the sensing target is a first candidate location in the initial location search area, and determining, based on the first candidate location and the estimated motion trajectory, an angle of arrival and/or an angle of departure of a dynamic reflection path corresponding to each trajectory point on the estimated motion trajectory;

determining, according to target information, a trajectory location confidence of each trajectory point at which the sensing target is located on the estimated motion trajectory, where the target information includes: the angle of arrival and/or the angle of departure of the dynamic reflection path corresponding to each trajectory point on the estimated motion trajectory, and the second measurement quantity results reported by the first devices; and

determining an initial location confidence corresponding to the first candidate location according to the trajectory location confidence corresponding to each trajectory point on the estimated motion trajectory, where

the first candidate location is any candidate location in the plurality of candidate locations.

Optionally, the target information further includes:

a weight of each first device, where the weight indicates a measurement quantity confidence of the corresponding first device, where

the trajectory location confidence is positively correlated with a first value of each first device, and the first value is a product of the weight of the corresponding first device and the second measurement quantity.

Optionally, the weight corresponding to each first device is determined for the third device based on device information of the first device, where

the device information includes at least one of:
status information, sensing capability information, or prior information.

Optionally, the status information includes at least one of:
location information, a location information determining manner, motion status information, panel orientation information, panel inclination angle information, communication status information, sensing status information, or beamforming configuration information.
Optionally, the second measurement quantity is a suppressed second measurement quantity obtained by the first device by suppressing interference energy other than a dynamic reflection path spectrum peak in the second measurement quantity.
Optionally, the receiving second measurement quantity results sent by at least two first devices includes:

receiving the second measurement quantity results and second timestamps sent by the at least two first devices, where the second timestamps are timestamps corresponding to the second measurement quantity results; or
receiving the second measurement quantity results and second serial numbers sent by the at least two first devices in a case that the APS measurement is periodic measurement, where the second serial numbers are serial numbers corresponding to the second measurement quantity results.

The determining a current location of the sensing target according to the initial location, the first measurement quantity results, and the second measurement quantity results includes:

determining the current location of the sensing target according to the initial location, the first measurement quantity results, the second measurement quantity results, and the second timestamps; or
determining the current location of the sensing target according to the initial location, the first measurement quantity results, the second measurement quantity results, and the second serial numbers.

Optionally, the second measurement quantity includes at least one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

Optionally, the apparatus further includes:

a first sending module, configured to send angle information to at least two first devices, where the angle information includes an angle of arrival or an angle of departure from the sensing target to the first device; and
the second measurement quantity includes:
a measurement quantity obtained by the first device by performing APS measurement of the angle of arrival or the angle of departure on the sensing target.

Optionally, the apparatus further includes:
a second sending module, configured to send parameter configuration information of the sensing measurement to the at least two first devices and the sending device.
Optionally, the parameter configuration information includes at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, where
one Burst refers to a set of sensing signals/integrated sensing and communication signals/reference signals sent continuously in time domain; and

the antenna information includes at least one of:
an antenna index, an antenna port index, or an antenna quantity.

Optionally, the apparatus further includes:

a third receiving module, configured to receive device information sent by a plurality of devices, where the plurality of devices include at least one of: at least one terminal and at least one network side device; and
a second determining module, configured to determine devices participating in collaborative sensing in the plurality of devices according to the device information sent by the plurality of devices.

Optionally, the device information includes at least one of:
status information, sensing capability information, or prior information.
Optionally, the status information includes at least one of:
location information, a location information determining manner, motion status information, panel orientation information, panel inclination angle information, communication status information, sensing status information, or beamforming configuration information.
Optionally, the determining devices participating in collaborative sensing in the plurality of devices according to the device information sent by the plurality of devices includes:
determining the devices participating in collaborative sensing in the plurality of devices according to the device information sent by the plurality of devices and sensing area information.
Optionally, the apparatus further includes:
a third determining module, configured to allocate devices participating in collaborative sensing to the sensing target from among the determined devices participating in collaborative sensing.
Optionally, the allocating devices participating in collaborative sensing to the sensing target from among the determined devices participating in collaborative sensing includes:

allocating corresponding devices to each sensing sub-area, where the sensing sub-area is an area of a smaller physical range obtained by dividing a sensing area; and
allocating devices corresponding to a sensing sub-area in which the sensing target is located to the sensing target.

Optionally, the sensing sub-area includes: a network side device sensing sub-area and a terminal sensing sub-areas, at least one network side device is allocated to one network side device sensing sub-area, at least one terminal is allocated to one terminal sensing sub-area, and one network side device sensing sub-area covers at least one terminal sensing sub-area; and

the apparatus further includes:
an allocation module, configured to associate a network side device allocated to one network side device sensing sub-area with a terminal allocated to at least one terminal sensing sub-area.

Optionally, in a case that a same terminal exists in terminals allocated to two terminal sensing sub-areas, the same terminal participates in collaborative sensing in the two terminal sensing sub-areas in a time division multiplexing manner, or a frequency division multiplexing manner, or a code division multiplexing manner.
Optionally, the apparatus further includes:

an updating module to update devices participating in collaborative sensing for the sensing target, where
the updating devices participating in collaborative sensing includes at least one of:
adding a terminal, changing a terminal, removing a terminal, adding a network side device, changing a network side device, or removing a network side device.

Optionally, the updating devices participating in collaborative sensing for the sensing target includes at least one of:

updating, under a first condition, a network side device participating in collaborative sensing for the sensing target; or
updating, under a second condition, a terminal participating in collaborative sensing for the sensing target.

Optionally, the first condition includes at least one of:

it is determined based on the trajectory of the sensing target that the sensing target is about to leave or has left a sensing sub-area corresponding to a network side device;

it is determined based on the trajectory of the sensing target that a distance between the sensing target and at least one network side device participating in collaborative sensing exceeds a maximum sensing distance of the corresponding device, and remaining network side devices participating in collaborative sensing are insufficient to improve a sensing result satisfying preset sensing quality of service QoS;

a first measurement quantity result reported by a network side device is lower than a preset threshold;

a first measurement quantity result reported by a terminal associated with a network side device is lower than a preset threshold;

a second measurement quantity result reported by a network side device is lower than a preset threshold;

a second measurement quantity result reported by a terminal associated with a network side device is lower than a preset threshold; or

it is determined based on the trajectory of the sensing target that a span of a trajectory physical range of the sensing target exceeds a preset threshold;

and/or

the second condition includes at least one of:

it is determined based on the trajectory of the sensing target that the sensing target is about to leave or has left a sensing sub-area corresponding to a terminal;

it is determined based on the trajectory of the sensing target that a distance between the sensing target and at least one terminal participating in collaborative sensing exceeds a maximum sensing distance of the corresponding terminal, and remaining terminals participating in collaborative sensing are insufficient to improve a sensing result satisfying preset sensing QoS;

a first measurement quantity result reported by a terminal is lower than a preset threshold;

a second measurement quantity result reported by a terminal is lower than a preset threshold;

it is determined based on the trajectory of the sensing target that a span of a trajectory physical range of the sensing target exceeds a preset threshold; or

switching of a network side device participating in sensing is triggered.

Optionally, trajectory sensing of the sensing target is initiated by the third device based on a sensing requirement; and/or

trajectory sensing of the sensing target is ended based on a trajectory tracking end condition.

The target positioning sensing apparatus described above can improve positioning capabilities of the communication system.

The target positioning sensing apparatus in this embodiment of this application may be an electronic device, for example, the foregoing third device, such as an electronic device with an operating system, or a component in an electronic device, such as an integrated circuit or a chip. The electronic device may be a network side device, a core network device, a sensing device, or another device other than a terminal. For example, the network side device may include, but is not limited to, the types of network side devices listed in embodiments of this application, and the another device may be a server, a network attached storage NAS, or the like. This is not specifically limited in this embodiment of this application.

The target positioning sensing apparatus provided in this embodiment of this application can implement the processes implemented in the method embodiment shown in FIG. 3, and achieve the same technical effects. To avoid repetition, details are not described herein again.

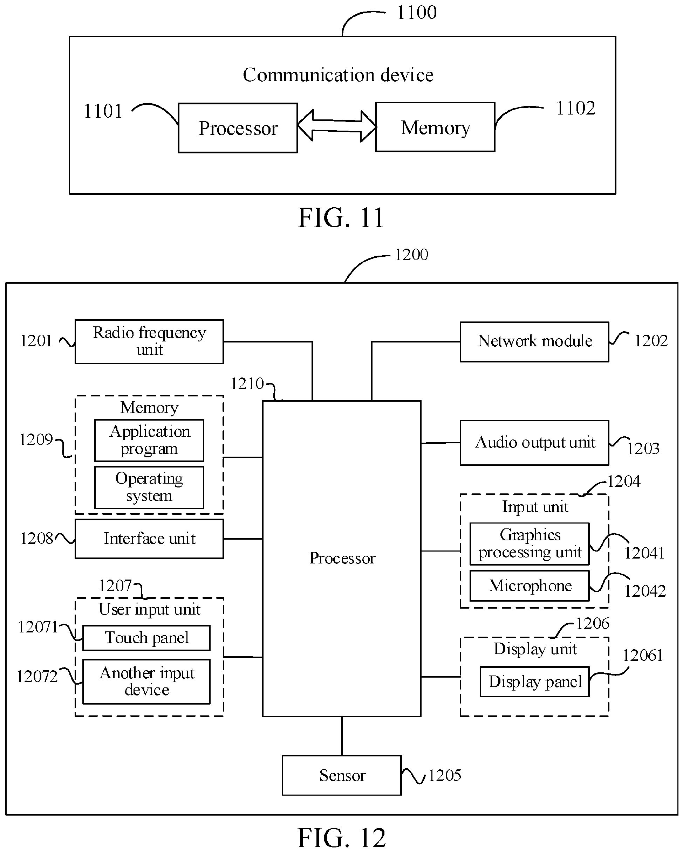

Optionally, as shown in FIG. 11, an embodiment of this application further provides a communication device 1100, including a processor 1101, a memory 1102, and a program or instructions stored in the memory 1102 and executable on the processor 1101. For example, when the communication device 1100 is the first device, the program or the instructions, when executed by the processor 1101, implement the steps of embodiments of the target positioning sensing method on the first device side above, and can achieve the same technical effects. When the communication device 1100 is the third device, the program or the instructions, when executed by the processor 1101, implement the steps of embodiments of the target positioning sensing method on the third device side above, and can achieve the same technical effects. To avoid repetition, details are not described herein again.

An embodiment of this application further provides a communication device, including a processor and a communication interface, where the communication interface is configured to perform sensing measurement on a sensing target to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and send the first measurement quantity result, where the first measurement quantity result is used for determining a positioning sensing result of the sensing target. This communication device embodiment corresponds to the foregoing first device-side method embodiment. Each implementation process and implementation of the foregoing method embodiment can be applied to this terminal embodiment, and can achieve the same technical effects.

Specifically, FIG. 12 is a schematic structural diagram of hardware of a communication device according to an embodiment of this application. The communication device is a first device, and an example in which the first device is a terminal is used for description.

The communication device 1200 includes, but is not limited to, at least some components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include the power supply (for example, a battery) for supplying power to the components. The power supply may be logically connected to the processor 1210 by using a power management system, thereby implementing functions such as charging, discharging, and power consumption management by using the power management system. A terminal structure shown in FIG. 12 does not constitute a limitation to the terminal, and the terminal may include more or fewer components than those shown in the figure, or some components may be combined, or a different component deployment may be used. Details are not described herein again.

It should be understood that in this embodiment of this application, the input unit 1204 may include a graphics processing unit (Graphics Processing Unit, GPU) 12041 and a microphone 12042, and the graphics processing unit 12041 processes image data of still images or videos obtained by an image capture apparatus (for example, a camera) in a video capture mode or an image capture mode. The display unit 1206 may include a display panel 12061, and the display panel 12061 may be configured in a form such as a liquid crystal display or an organic light-emitting diode. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include, but is not limited to, a physical keyboard, a functional key (for example, a volume control key or a switch key), a track ball, a mouse, and a joystick, which are not repeated herein.

In this embodiment of this application, the radio frequency unit 1201 receives downlink data from a network side device and then transmits the data to the processor 1210 for processing. In addition, the radio frequency unit 1201 may send uplink data to the network side device. Generally, the radio frequency unit 1201 includes, but is not limited to, an antenna, an amplifier, a transceiver, a coupler, a low noise amplifier, a duplexer, and the like.

The memory 1209 may be configured to store software programs or instructions, and various pieces of data. The memory 1209 may mainly include a first storage area storing a program or instructions and a second storage area storing data. The first storage area may store an operating system, an application program or instruction required by at least one function (for example, a sound playing function and an image playing function), and the like. In addition, the memory 1209 may include a volatile memory or a non-volatile memory, or the memory 1209 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 1209 in this embodiment of this application includes, but is not limited to, such memories and any other suitable types of memories.

The processor 1210 may include one or more processing units. Optionally, the processor 1210 integrates an application processor and a modem processor. The application processor mainly processes operations related to an operating system, a user interface, an application program, and the like. The modem processor mainly processes wireless communication signals, and may be, for example, a baseband processor. It may be understood that the modem processor may alternatively not be integrated into the processor 1210.

The radio frequency unit 1201 is configured to perform sensing measurement on a sensing target to obtain a first measurement quantity result of a first measurement quantity of a dynamic reflection path of a first signal, where the first measurement quantity includes: at least one of a reflection path Doppler frequency or a reflection path length change speed, and the first signal is a signal sent by a second device to the first device; and send the first measurement quantity result, where the first measurement quantity result is used for determining a positioning sensing result of the sensing target.

Optionally, the first device includes:
a terminal, a network side device, or a dedicated sensing device for performing sensing measurement.

The second device includes:
a terminal, a network side device, or a dedicated sensing device for sending the first signal.

Optionally, the positioning sensing result includes at least one of:

a speed of the sensing target;
a speed direction of the sensing target;
a trajectory of the sensing target; or
a future predicted location of the sensing target.

Optionally, the first signal includes one of:
a dedicated sensing signal, an integrated sensing and communication signal, or an LTE or NR reference signal.

Optionally, the sending the first measurement quantity result includes:

sending the first measurement quantity result and a first timestamp, where the first timestamp is a timestamp corresponding to the first measurement quantity result; or
sending the first measurement quantity result and a first serial number in a case that the sensing measurement is periodic measurement, where the first serial number is a serial number corresponding to the first measurement quantity result.

Optionally, the sending the first measurement quantity result includes:
sending a plurality of first measurement quantity results, where the plurality of first measurement quantity results are measurement quantities obtained through a plurality of times of sensing measurement.

Optionally, the radio frequency unit 1201 is further configured to:

perform angle power spectrum APS measurement on a wireless channel in which the sensing target is located, to obtain a second measurement quantity result of a second measurement quantity, where the second measurement quantity includes: an angle of arrival APS and/or an angle of departure APS of the channel; and
send the second measurement quantity result, where the second measurement quantity result is used for determining at least one of an initial location and the trajectory of the sensing target.

Optionally, the performing APS measurement on a wireless channel in which the sensing target is located, to obtain a second measurement quantity result of a second measurement quantity includes at least one of:

in a case that the second measurement quantity includes the angle of departure APS, and the first device is a network side device, performing downlink beam sweeping, receiving a first beam sweeping measurement result sent by a terminal, and determining the angle of departure APS according to the first beam sweeping measurement result, where the beam sweeping measurement result includes reference signal received power RSRP measurement results corresponding to a plurality of beams;
in a case that the second measurement quantity includes the angle of arrival APS, and the first device is a terminal, measuring an RSRP measurement result of a fixed downlink beam, and determining the angle of arrival APS according to the RSRP measurement result of the fixed downlink beam;
in a case that the second measurement quantity includes the angle of departure APS, and the first device is a terminal, performing uplink beam sweeping, receiving a second beam sweeping measurement result sent by a network side device, and determining the angle of departure APS according to the second beam sweeping measurement result, where the beam sweeping measurement result includes RSRP measurement results corresponding to a plurality of beams; or
in a case that the second measurement quantity includes the angle of arrival APS, and the first device is a network side device, measuring, by the first device, an RSRP measurement result of a fixed uplink beam, and determining the angle of arrival APS according to the RSRP measurement result of the fixed uplink beam.

Optionally, the radio frequency unit 1201 is further configured to:

suppress interference energy other than a dynamic reflection path spectrum peak in the second measurement quantity result, to obtain the suppressed second measurement quantity result; and
the sending the second measurement quantity result includes:
sending the suppressed second measurement quantity result.

Optionally, the sending the second measurement quantity result includes:

sending the second measurement quantity result and a second timestamp, where the second timestamp is a timestamp corresponding to the second measurement quantity result; or
sending the second measurement quantity result and a second serial number in a case that the APS measurement is periodic measurement, where the second serial number is a serial number corresponding to the second measurement quantity result.

Optionally, the second measurement quantity includes one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

Optionally, the radio frequency unit 1201 is further configured to:

receive angle information sent by a third device, where the angle information includes an angle of arrival or an angle of departure from the sensing target to the first device; and
the performing APS measurement on the sensing target, to obtain the second measurement quantity includes:
performing APS measurement of the angle of arrival or the angle of departure on the sensing target to obtain the second measurement quantity, where
the third device is a device configured to calculate the positioning sensing result of the sensing target.

Optionally, the third device includes one of:
a sensing network function entity, a core network device, a network side device, or a terminal.
Optionally, the radio frequency unit 1201 is further configured to:
receive parameter configuration information of the sensing measurement.
Optionally, the parameter configuration information includes at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, where
one Burst refers to a set of sensing signals/integrated sensing and communication signals/reference signals sent continuously in time domain; and
the antenna information includes at least one of:
an antenna index, an antenna port index, or an antenna quantity.

Optionally, the radio frequency unit 1201 is further configured to:
report device information of the first device to a third device, where the device information is used by the third device to determine whether the first device participates in collaborative sensing.
Optionally, the device information includes at least one of:
status information, sensing capability information, or prior information.
Optionally, the status information includes at least one of:
location information, a location information determining manner, motion status information, panel orientation information, panel inclination angle information, communication status information, sensing status information, or beamforming configuration information.
Optionally, the reporting device information of the first device to a third device includes at least one of:

in a case that the first device is a terminal, reporting the device information of the first device to the third device through a network side device; or
in a case that the first device is a network side device, reporting the device information of the first device to the third device, and reporting device information of a terminal to the third device, where the device information of the terminal is used by the third device to determine whether the terminal participates in collaborative sensing of the sensing target.

The communication device described above can improve positioning capabilities of the communication system.
An embodiment of this application further provides a communication device. The communication device is a third device, and includes a processor and a communication interface, where the communication interface is configured to receive first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and the processor or the communication interface is configured to determine a positioning sensing result of the sensing target based on the first measurement quantity results sent by the at least two first devices. The communication device embodiment corresponds to the foregoing third device method embodiment. Each implementation process and implementation of the foregoing method embodiment can be applied to this network side device embodiment, and can achieve the same technical effects.

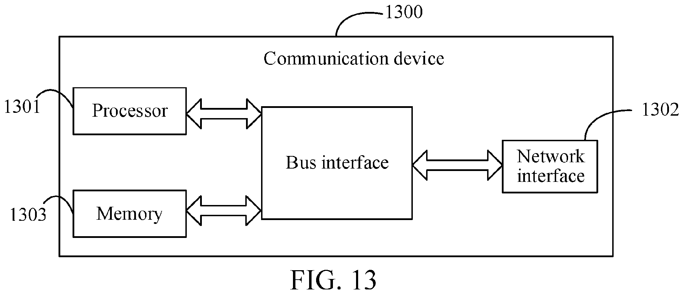

Specifically, an embodiment of this application further provides a communication device, which is a third device. In this embodiment, an example in which the communication device is a core network device is used for description. As shown in FIG. 13, the communication device 1300 includes a processor 1301, a network interface 1302, and a memory 1303. The network interface 1302 is, for example, a common public radio interface (common public radio interface, CPRI).

Specifically, the communication device 1300 in this embodiment of the present invention further includes: instructions or a program stored in the memory 1303 and executable on the processor 1301. The processor 1301 invokes the instructions or the program in the memory 1303 to perform the method executed by each module shown in FIG. 3, and achieve the same technical effects. To avoid repetition, details are not repeated herein.

The network interface 1302 is configured to receive first measurement quantity results sent by at least two first devices, where the first measurement quantity results are results of a first measurement quantity of a dynamic reflection path of a first signal that are obtained by the first devices by performing sensing measurement on a sensing target, the first measurement quantity includes: at least one of a reflection path Doppler frequency or a reflection path length change speed, and the first signal is a signal sent by a second device to the first device; and

the processor 1301 is configured to determine a positioning sensing result of the sensing target based on the first measurement quantity results sent by the at least two first devices.

Optionally, the first device includes:
a terminal, a network side device, or a dedicated sensing device for performing sensing measurement.

The second device includes:
a terminal, a network side device, or a dedicated sensing device for sending the first signal.

Optionally, the positioning sensing result includes at least one of:

a speed of the sensing target;
a speed direction of the sensing target;
a trajectory of the sensing target; or
a future predicted location of the sensing target.

Optionally, the first signal includes one of:
a dedicated sensing signal, an integrated sensing and communication signal, or an LTE or NR reference signal.

Optionally, the receiving first measurement quantity results sent by at least two first devices includes:

receiving the first measurement quantity results and first timestamps sent by the at least two first devices, where the first timestamps are timestamps corresponding to the first measurement quantity results; or
receiving the first measurement quantity results and first serial numbers sent by the at least two first devices in a case that the sensing measurement is periodic measurement, where the first serial numbers are serial numbers corresponding to the first measurement quantity results.

The determining a positioning sensing result of the sensing target based on the first measurement quantity results sent by the at least two first devices includes:

determining the positioning sensing result of the sensing target based on the first measurement quantity results and the first timestamps sent by the at least two first devices; or
determining the positioning sensing result of the sensing target based on the first measurement quantity results and the first serial numbers sent by the at least two first devices.

Optionally, the receiving first measurement quantity results sent by at least two first devices includes:
receiving a plurality of first measurement quantity results sent by the at least two first devices, where the plurality of first measurement quantity results are measurement quantities obtained through a plurality of times of sensing measurement.

Optionally, the network interface 1302 is further configured to:

receive second measurement quantity results sent by at least two second devices, where the second measurement quantity results are results of a second measurement quantity that are obtained by the second devices by performing angle power spectrum APS measurement on a wireless channel in which the sensing target is located, and the second measurement quantity includes: an angle of arrival APS and/or an angle of departure APS of the channel; and
the determining a positioning sensing result of the sensing target includes:
determining an initial location of the sensing target;

determining a current speed and a speed direction of the sensing target according to the initial location and the first measurement quantity results;

determining a current location of the sensing target according to the initial location, the first measurement quantity results, and the second measurement quantity results; and

determining a trajectory of the sensing target based on the initial location, the current speed, the speed direction, and the current location.

Optionally, the initial location of the sensing target includes:

in a case that the sensing target is a terminal, an initial location of the sensing target determined based on a terminal positioning technology; or

in a case that the sensing target is not a terminal, an initial location of the sensing target determined based on a device-free device-free technology.

Optionally, the initial location of the sensing target determined based on the device-free technology includes:

an initial location of the sensing target determined based on echolocation; or

an initial location of the sensing target determined based on angle information of the sensing target.

Optionally, the initial location of the sensing target determined based on the angle information of the sensing target is determined in the following manner:

calculating, by the third device, a confidence of each candidate location in a plurality of candidate locations in an initial location search area, where the confidence of each candidate location is determined based on angle information of at least two first devices to the sensing target; and

determining, by the third device, a location with a greatest confidence in the plurality of candidate locations as the initial location of the sensing target.

Optionally, the calculating, by the third device, a confidence of each candidate location in a plurality of candidate locations in an initial location search area includes:

determining an estimated motion trajectory of the sensing target according to the speed and the speed direction of the sensing target;

assuming that the initial location of the sensing target is a first candidate location in the initial location search area, and determining, based on the first candidate location and the estimated motion trajectory, an angle of arrival and/or an angle of departure of a dynamic reflection path corresponding to each trajectory point on the estimated motion trajectory;

determining, according to target information, a trajectory location confidence of each trajectory point at which the sensing target is located on the estimated motion trajectory, where the target information includes: the angle of arrival and/or the angle of departure of the dynamic reflection path corresponding to each trajectory point on the estimated motion trajectory, and the second measurement quantity results reported by the first devices; and

determining an initial location confidence corresponding to the first candidate location according to the trajectory location confidence corresponding to each trajectory point on the estimated motion trajectory, where

the first candidate location is any candidate location in the plurality of candidate locations.

Optionally, the target information further includes:

a weight of each first device, where the weight indicates a measurement quantity confidence of the corresponding first device, where

the trajectory location confidence is positively correlated with a first value of each first device, and the first value is a product of the weight of the corresponding first device and the second measurement quantity.

Optionally, the weight corresponding to each first device is determined for the third device based on device information of the first device, where

the device information includes at least one of:

status information, sensing capability information, or prior information.

Optionally, the status information includes at least one of:
location information, a location information determining manner, motion status information, panel orientation information, panel inclination angle information, communication status information, sensing status information, or beamforming configuration information.

Optionally, the second measurement quantity is a suppressed second measurement quantity obtained by the first device by suppressing interference energy other than a dynamic reflection path spectrum peak in the second measurement quantity.

Optionally, the receiving second measurement quantity results sent by at least two first devices includes:

receiving the second measurement quantity results and second timestamps sent by the at least two first devices, where the second timestamps are timestamps corresponding to the second measurement quantity results; or
receiving the second measurement quantity results and second serial numbers sent by the at least two first devices in a case that the APS measurement is periodic measurement, where the second serial numbers are serial numbers corresponding to the second measurement quantity results.

The determining a current location of the sensing target according to the initial location, the first measurement quantity results, and the second measurement quantity results includes:

determining the current location of the sensing target according to the initial location, the first measurement quantity results, the second measurement quantity results, and the second timestamps; or
determining the current location of the sensing target according to the initial location, the first measurement quantity results, the second measurement quantity results, and the second serial numbers.

Optionally, the second measurement quantity includes at least one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

Optionally, the network interface 1302 is further configured to:

send angle information to at least two first devices, where the angle information includes an angle of arrival or an angle of departure from the sensing target to the first device; and
the second measurement quantity includes:
a measurement quantity obtained by the first device by performing APS measurement of the angle of arrival or the angle of departure on the sensing target.

Optionally, the network interface 1302 is further configured to:
send parameter configuration information of the sensing measurement to the at least two first devices and the sending device.

Optionally, the parameter configuration information includes at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, where
one Burst refers to a set of sensing signals/integrated sensing and communication signals/reference signals sent continuously in time domain; and
the antenna information includes at least one of:
an antenna index, an antenna port index, or an antenna quantity.

Optionally, the network interface 1302 is further configured to:

receive device information sent by a plurality of devices, where the plurality of devices include at least one of: at least one terminal and at least one network side device; and
the processor 1301 is further configured to determine devices participating in collaborative sensing in the plurality of devices according to the device information sent by the plurality of devices.

Optionally, the device information includes at least one of:

status information, sensing capability information, or prior information.

Optionally, the status information includes at least one of:

location information, a location information determining manner, motion status information, panel orientation information, panel inclination angle information, communication status information, sensing status information, or beamforming configuration information.

Optionally, the determining devices participating in collaborative sensing in the plurality of devices according to the device information sent by the plurality of devices includes:

determining the devices participating in collaborative sensing in the plurality of devices according to the device information sent by the plurality of devices and sensing area information.

Optionally, the processor 1301 is further configured to:

allocate devices participating in collaborative sensing to the sensing target from among the determined devices participating in collaborative sensing.

Optionally, the allocating devices participating in collaborative sensing to the sensing target from among the determined devices participating in collaborative sensing includes:

allocating corresponding devices to each sensing sub-area, where the sensing sub-area is an area of a smaller physical range obtained by dividing a sensing area; and
allocating devices corresponding to a sensing sub-area in which the sensing target is located to the sensing target.

Optionally, the sensing sub-area includes: a network side device sensing sub-area and a terminal sensing sub-areas, at least one network side device is allocated to one network side device sensing sub-area, at least one terminal is allocated to one terminal sensing sub-area, and one network side device sensing sub-area covers at least one terminal sensing sub-area; and

the processor 1301 is further configured to:
associate a network side device allocated to one network side device sensing sub-area with a terminal allocated to at least one terminal sensing sub-area.

Optionally, in a case that a same terminal exists in terminals allocated to two terminal sensing sub-areas, the same terminal participates in collaborative sensing in the two terminal sensing sub-areas in a time division multiplexing manner, or a frequency division multiplexing manner, or a code division multiplexing manner.

Optionally, the processor 1301 is further configured to:

update devices participating in collaborative sensing for the sensing target, where
the updating devices participating in collaborative sensing includes at least one of:
adding a terminal, changing a terminal, removing a terminal, adding a network side device, changing a network side device, or removing a network side device.

Optionally, the updating devices participating in collaborative sensing for the sensing target includes at least one of:

updating, under a first condition, a network side device participating in collaborative sensing for the sensing target; or
updating, under a second condition, a terminal participating in collaborative sensing for the sensing target.

Optionally, the first condition includes at least one of:

it is determined based on the trajectory of the sensing target that the sensing target is about to leave or has left a sensing sub-area corresponding to a network side device;
it is determined based on the trajectory of the sensing target that a distance between the sensing target and at least one network side device participating in collaborative sensing exceeds a maximum sensing distance of the corresponding device, and remaining network side devices participating in collaborative sensing are insufficient to improve a sensing result satisfying preset sensing quality of service QoS;
a first measurement quantity result reported by a network side device is lower than a preset threshold;
a first measurement quantity result reported by a terminal associated with a network side device is lower than a preset threshold;
a second measurement quantity result reported by a network side device is lower than a preset threshold;
a second measurement quantity result reported by a terminal associated with a network side device is lower than a preset threshold; or

it is determined based on the trajectory of the sensing target that a span of a trajectory physical range of the sensing target exceeds a preset threshold;

and/or

the second condition includes at least one of:

it is determined based on the trajectory of the sensing target that the sensing target is about to leave or has left a sensing sub-area corresponding to a terminal;

it is determined based on the trajectory of the sensing target that a distance between the sensing target and at least one terminal participating in collaborative sensing exceeds a maximum sensing distance of the corresponding terminal, and remaining terminals participating in collaborative sensing are insufficient to improve a sensing result satisfying preset sensing QoS;

a first measurement quantity result reported by a terminal is lower than a preset threshold;

a second measurement quantity result reported by a terminal is lower than a preset threshold;

it is determined based on the trajectory of the sensing target that a span of a trajectory physical range of the sensing target exceeds a preset threshold;

switching of a network side device participating in sensing is triggered.

Optionally, trajectory sensing of the sensing target is initiated by the third device based on a sensing requirement; and/or

trajectory sensing of the sensing target is ended based on a trajectory tracking end condition.

The communication device described above can improve positioning capabilities of the communication system.

An embodiment of this application further provides a readable storage medium. The readable storage medium stores a program or instructions, where the program or the instructions, when executed by a processor, implement the processes of embodiments of the foregoing transmission determining method, and achieve the same technical effects. To avoid repetition, details are not described herein again.

The processor is the processor in the terminal described in the foregoing embodiment. The readable storage medium includes a computer-readable storage medium such as a computer read only memory (ROM), a random access memory (RAM), a magnetic disk, or an optical disk.

An embodiment of this application further provides a chip, where the chip includes a processor and a communication interface, the communication interface is coupled to the processor, and the processor is configured to run a program or instructions, to implement the processes of embodiments of the foregoing target positioning sensing method, and achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program product, stored in a storage medium, where the computer program product is executed by at least one processor to implement the processes of embodiments of the target positioning sensing method, and can achieve the same technical effects. To avoid repetition, details are not described herein again.

An embodiment of this application further provides a transmission determining system, including: a first device, a second device, and a third device. The first device may be configured to perform the steps of the target positioning sensing method on the first device side as described above, and the third device may be configured to perform the steps of the target positioning sensing method on the third device side as described above.

It should be noted that the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

1. A target positioning sensing method, comprising:

    performing, by a first device, sensing measurement on a sensing target, to obtain a first measurement quantity result of a first measurement quantity of a dynamic reflection path of a first signal, wherein the first measurement quantity comprises: at least one of a reflection path Doppler frequency or a reflection path length change speed, and the first signal is a signal sent by a second device to the first device; and
    sending, by the first device, the first measurement quantity result, wherein the first measurement quantity result is used for determining a positioning sensing result of the sensing target.

2. The method according to claim 1, wherein the positioning sensing result comprises at least one of:

    a speed of the sensing target;
    a speed direction of the sensing target;
    a trajectory of the sensing target; or
    a future predicted location of the sensing target.

3. The method according to claim 1 or 2, wherein the method further comprises:

    performing, by the first device, angle power spectrum APS measurement on a wireless channel in which the sensing target is located, to obtain a second measurement quantity result of a second measurement quantity, wherein the second measurement quantity comprises: an angle of arrival APS and/or an angle of departure APS of the channel; and
    sending, by the first device, the second measurement quantity result, wherein the second measurement quantity result is used for determining at least one of an initial location and the trajectory of the sensing target.

4. The method according to claim 3, wherein the performing, by the first device, APS measurement on a wireless channel in which the sensing target is located, to obtain a second measurement quantity result of a second measurement quantity comprises at least one of:

    in a case that the second measurement quantity comprises the angle of departure APS, and the first device is a network side device, performing, by the first device, downlink beam sweeping, receiving a first beam sweeping measurement result sent by a terminal, and determining the angle of departure APS according to the first beam sweeping measurement result, wherein the beam sweeping measurement result comprises reference signal received power RSRP measurement results corresponding to a plurality of beams;
    in a case that the second measurement quantity comprises the angle of arrival APS, and the first device is a terminal, measuring, by the first device, an RSRP measurement result of a fixed downlink beam, and determining the angle of arrival APS according to the RSRP measurement result of the fixed downlink beam;
    in a case that the second measurement quantity comprises the angle of departure APS, and the first device is a terminal, performing, by the first device, uplink beam sweeping, receiving a second beam sweeping measurement result sent by a network side device, and determining the angle of departure APS according to the second beam sweeping measurement result, wherein the beam sweeping measurement result comprises RSRP measurement results corresponding to a plurality of beams; or
    in a case that the second measurement quantity comprises the angle of arrival APS, and the first device is a network side device, measuring, by the first device, an RSRP measurement result of a fixed uplink beam, and determining the angle of arrival APS according to the RSRP measurement result of the fixed uplink beam.

5. The method according to claim 3, wherein the method further comprises:

suppressing interference energy other than a dynamic reflection path spectrum peak in the second measurement quantity result, to obtain the suppressed second measurement quantity result; and

the sending, by the first device, the second measurement quantity result comprises:

sending, by the first device, the suppressed second measurement quantity result.

6. The method according to claim 3, wherein the second measurement quantity comprises one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

7. The method according to claim 3, wherein the method further comprises:

receiving, by the first device, angle information sent by a third device, wherein the angle information comprises an angle of arrival or an angle of departure from the sensing target to the first device; and
the performing, by the first device, APS measurement on the sensing target, to obtain the second measurement quantity comprises:

performing, by the first device, APS measurement of the angle of arrival or the angle of departure on the sensing target to obtain the second measurement quantity, wherein
the third device is a device configured to calculate the positioning sensing result of the sensing target.

8. The method according to claim 1 or 2, wherein the method further comprises:
receiving, by the first device, parameter configuration information of the sensing measurement.

9. The method according to claim 8, wherein the parameter configuration information comprises at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, wherein
one Burst refers to a set of sensing signals/integrated sensing and communication signals/reference signals sent continuously in time domain; and
the antenna information comprises at least one of:
an antenna index, an antenna port index, or an antenna quantity.

10. The method according to claim 1 or 2, wherein the method further comprises:
reporting, by the first device, device information of the first device to a third device, wherein the device information is used by the third device to determine whether the first device participates in collaborative sensing.

11. The method according to claim 10, wherein the device information comprises at least one of:
status information, sensing capability information, or prior information.

12. The method according to claim 10, wherein the reporting, by the first device, device information of the first device to a third device comprises at least one of:

in a case that the first device is a terminal, reporting, by the first device, the device information of the first device to the third device through a network side device; or
in a case that the first device is a network side device, reporting, by the first device, the device information of the first device to the third device, and reporting device information of a terminal to the third device, wherein the device information of the terminal is used by the third device to determine whether the terminal participates in collaborative sensing of the sensing target.

13. A target positioning sensing method, comprising:

receiving, by a third device, first measurement quantity results sent by at least two first devices, wherein the first measurement quantity results are results of a first measurement quantity of a dynamic reflection path of a first signal that are obtained by the first devices by performing sensing measurement on a sensing target, the first measurement quantity comprises: at least one of a reflection path Doppler frequency or a reflection path length change speed, and the first signal is a signal sent by a second device to the first device; and determining, by the third device, a positioning sensing result of the sensing target based on the first measurement quantity results sent by the at least two first devices.

14. The method according to claim 13, wherein the positioning sensing result comprises at least one of:

   a speed of the sensing target;
   a speed direction of the sensing target;
   a trajectory of the sensing target; or
   a future predicted location of the sensing target.

15. The method according to claim 13 or 14, wherein the method further comprises:

   receiving, by the third device, second measurement quantity results sent by at least two second devices, wherein the second measurement quantity results are results of a second measurement quantity that are obtained by the second devices by performing angle power spectrum APS measurement on a wireless channel in which the sensing target is located, and the second measurement quantity comprises: an angle of arrival APS and/or an angle of departure APS of the channel; and
   the determining a positioning sensing result of the sensing target comprises:

      determining, by the third device, an initial location of the sensing target;
      determining, by the third device, a current speed and a speed direction of the sensing target according to the initial location and the first measurement quantity results;
      determining, by the third device, a current location of the sensing target according to the initial location, the first measurement quantity results, and the second measurement quantity results; and
      determining, by the third device, a trajectory of the sensing target based on the initial location, the current speed, the speed direction, and the current location.

16. The method according to claim 15, wherein the initial location of the sensing target comprises:

   in a case that the sensing target is a terminal, an initial location of the sensing target determined based on a terminal positioning technology; or
   in a case that the sensing target is not a terminal, an initial location of the sensing target determined based on a device-free device-free technology.

17. The method according to claim 16, wherein the initial location of the sensing target determined based on the device-free technology comprises:

   an initial location of the sensing target determined based on echolocation; or
   an initial location of the sensing target determined based on angle information of the sensing target.

18. The method according to claim 17, wherein the initial location of the sensing target determined based on the angle information of the sensing target is determined in the following manner:

   calculating, by the third device, a confidence of each candidate location in a plurality of candidate locations in an initial location search area, wherein the confidence of each candidate location is determined based on angle information of at least two first devices to the sensing target; and
   determining, by the third device, a location with a greatest confidence in the plurality of candidate locations as the initial location of the sensing target.

19. The method according to claim 18, wherein the calculating, by the third device, a confidence of each candidate location in a plurality of candidate locations in an initial location search area comprises:

   determining, by the third device, an estimated motion trajectory of the sensing target according to the speed and the speed direction of the sensing target;
   assuming, by the third device, that the initial location of the sensing target is a first candidate location in the initial location search area, and determining, based on the first candidate location and the estimated motion trajectory, an angle of arrival and/or an angle of departure of a dynamic reflection path corresponding to each trajectory point on the estimated motion trajectory;

determining, by the third device according to target information, a trajectory location confidence of each trajectory point at which the sensing target is located on the estimated motion trajectory, wherein the target information comprises: the angle of arrival and/or the angle of departure of the dynamic reflection path corresponding to each trajectory point on the estimated motion trajectory, and the second measurement quantity results reported by the first devices; and

determining, by the third device, an initial location confidence corresponding to the first candidate location according to the trajectory location confidence corresponding to each trajectory point on the estimated motion trajectory, wherein

the first candidate location is any candidate location in the plurality of candidate locations.

20. The method according to claim 19, wherein the target information further comprises:

a weight of each first device, wherein the weight indicates a measurement quantity confidence of the corresponding first device, wherein

the trajectory location confidence is positively correlated with a first value of each first device, and the first value is a product of the weight of the corresponding first device and the second measurement quantity.

21. The method according to claim 20, wherein the weight corresponding to each first device is determined for the third device based on device information of the first device, wherein

the device information comprises at least one of:
status information, sensing capability information, or prior information.

22. The method according to claim 15, wherein the second measurement quantity is a suppressed second measurement quantity obtained by the first device by suppressing interference energy other than a dynamic reflection path spectrum peak in the second measurement quantity.

23. The method according to claim 15, wherein the second measurement quantity comprises at least one of:

a channel angle of arrival APS or a channel angle of departure APS; or
an angle of arrival APS within a target angle range of a dynamic reflection path of the channel, or an angle of departure APS within the target angle range of the dynamic reflection path of the channel.

24. The method according to claim 15, wherein the method further comprises:

sending, by the third device, angle information to at least two first devices, wherein the angle information comprises an angle of arrival or an angle of departure from the sensing target to the first device; and
the second measurement quantity comprises:
a measurement quantity obtained by the first device by performing APS measurement of the angle of arrival or the angle of departure on the sensing target.

25. The method according to claim 13 or 14, wherein the method further comprises:
sending, by the third device, parameter configuration information of the sensing measurement to the at least two first devices and the sending device.

26. The method according to claim 25, wherein the parameter configuration information comprises at least one of:

a waveform, a subcarrier spacing, a bandwidth, burst Burst duration, an intra-Burst signal time interval, an inter-Burst time interval, transmit power, a signal format, a signal direction, a time resource, a frequency resource, antenna information, or a quasi-co-located QCL relationship, wherein
one Burst refers to a set of sensing signals/integrated sensing and communication signals/reference signals sent continuously in time domain; and
the antenna information comprises at least one of:
an antenna index, an antenna port index, or an antenna quantity.

27. The method according to claim 13 or 14, wherein the method further comprises:

receiving, by the third device, device information sent by a plurality of devices, wherein the plurality of devices comprise at least one of: at least one terminal and at least one network side device; and
determining, by the third device, devices participating in collaborative sensing in the plurality of devices according to the device information sent by the plurality of devices.

28. The method according to claim 27, wherein the device information comprises at least one of:
status information, sensing capability information, or prior information.

29. The method according to claim 28, wherein the determining, by the third device, devices participating in collaborative sensing in the plurality of devices according to the device information sent by the plurality of devices comprises:
determining, by the third device, the devices participating in collaborative sensing in the plurality of devices according to the device information sent by the plurality of devices and sensing area information.

30. The method according to claim 28, wherein the method further comprises:
allocating, by the third device, devices participating in collaborative sensing to the sensing target from among the determined devices participating in collaborative sensing.

31. The method according to claim 30, wherein the allocating, by the third device, devices participating in collaborative sensing to the sensing target from among the determined devices participating in collaborative sensing comprises:

allocating, by the third device, corresponding devices to each sensing sub-area, wherein the sensing sub-area is an area of a smaller physical range obtained by dividing a sensing area; and
allocating, by the third device, devices corresponding to a sensing sub-area in which the sensing target is located to the sensing target.

32. The method according to claim 31, wherein the sensing sub-area comprises: a network side device sensing sub-area and a terminal sensing sub-areas, at least one network side device is allocated to one network side device sensing sub-area, at least one terminal is allocated to one terminal sensing sub-area, and one network side device sensing sub-area covers at least one terminal sensing sub-area; and
the method further comprises:
associating, by the third device, a network side device allocated to one network side device sensing sub-area with a terminal allocated to at least one terminal sensing sub-area.

33. The method according to claim 31, wherein the method further comprises:

updating, by the third device, devices participating in collaborative sensing for the sensing target, wherein the updating devices participating in collaborative sensing comprises at least one of:
adding a terminal, changing a terminal, removing a terminal, adding a network side device, changing a network side device, or removing a network side device.

34. The method according to claim 33, wherein the updating, by the third device, devices participating in collaborative sensing for the sensing target comprises at least one of:

updating, by the third device under a first condition, a network side device participating in collaborative sensing for the sensing target; or
updating, by the third device under a second condition, a terminal participating in collaborative sensing for the sensing target, wherein
the first condition comprises at least one of:

it is determined based on the trajectory of the sensing target that the sensing target is about to leave or has left a sensing sub-area corresponding to a network side device;
it is determined based on the trajectory of the sensing target that a distance between the sensing target and at least one network side device participating in collaborative sensing exceeds a maximum sensing distance of the corresponding device, and remaining network side devices participating in collaborative sensing are insufficient to improve a sensing result satisfying preset sensing quality of service QoS;
a first measurement quantity result reported by a network side device is lower than a preset threshold;
a first measurement quantity result reported by a terminal associated with a network side device is lower than a preset threshold;

a second measurement quantity result reported by a network side device is lower than a preset threshold;

a second measurement quantity result reported by a terminal associated with a network side device is lower than a preset threshold; or

it is determined based on the trajectory of the sensing target that a span of a trajectory physical range of the sensing target exceeds a preset threshold;

and/or

the second condition comprises at least one of:

it is determined based on the trajectory of the sensing target that the sensing target is about to leave or has left a sensing sub-area corresponding to a terminal;

it is determined based on the trajectory of the sensing target that a distance between the sensing target and at least one terminal participating in collaborative sensing exceeds a maximum sensing distance of the corresponding terminal, and remaining terminals participating in collaborative sensing are insufficient to improve a sensing result satisfying preset sensing QoS;

a first measurement quantity result reported by a terminal is lower than a preset threshold;

a second measurement quantity result reported by a terminal is lower than a preset threshold;

it is determined based on the trajectory of the sensing target that a span of a trajectory physical range of the sensing target exceeds a preset threshold; or

switching of a network side device participating in sensing is triggered.

35. A target positioning sensing apparatus, comprising:

a first measurement module, configured to perform sensing measurement on a sensing target, to obtain a first measurement quantity result of a first measurement quantity of a dynamic reflection path of a first signal, wherein the first measurement quantity comprises: at least one of a reflection path Doppler frequency or a reflection path length change speed, and the first signal is a signal sent by a second device to a first device; and

a first sending module, configured to send the first measurement quantity result, wherein the first measurement quantity result is used for determining a positioning sensing result of the sensing target.

36. A target positioning sensing apparatus, comprising:

a first receiving module, configured to receive first measurement quantity results sent by at least two first devices, wherein the first measurement quantity results are results of a first measurement quantity of a dynamic reflection path of a first signal that are obtained by the first devices by performing sensing measurement on a sensing target, the first measurement quantity comprises: at least one of a reflection path Doppler frequency or a reflection path length change speed, and the first signal is a signal sent by a second device to the first device; and

a first determining module, configured to determine a positioning sensing result of the sensing target based on the first measurement quantity results sent by the at least two first devices.

37. A communication device, comprising a processor and a memory, wherein the memory stores a program or instructions executable on the processor, and the program or the instructions, when executed by the processor, implement the steps of the target positioning sensing method according to any one of claims 1 to 12.

38. A communication device, comprising a processor and a memory, wherein the memory stores a program or instructions executable on the processor, and the program or the instructions, when executed by the processor, implement the steps of the target positioning sensing method according to any one of claims 13 to 34.

39. A readable storage medium, storing a program or instructions, wherein the program or the instructions, when executed by a processor, implement the steps of the target positioning sensing method according to any one of claims 1 to 12, or implement the steps of the target positioning sensing method according to any one of claims 13 to 34.

Third device 13

Second device 12

11 Sensing target 11

First device    First device

FIG. 1

```
                      ┌─────────────────┐
                     ╱      Start         ╲
                     ╲                    ╱
                      └─────────┬─────────┘
                                │
                                ▼
┌──────────────────────────────────────────────────────────┐
│  A first device performs sensing measurement on a         │        201
│  sensing target, to obtain a first measurement quantity    │
│  result of a first measurement quantity of a dynamic       │
│  reflection path of a first signal                         │
└──────────────────────────────┬───────────────────────────┘
                                │
                                ▼
┌──────────────────────────────────────────────────────────┐
│  The first device sends the first measurement quantity    │        202
│  result, where the first measurement quantity result is    │
│  used for determining a positioning sensing result of the  │
│  sensing target                                            │
└──────────────────────────────┬───────────────────────────┘
                                │
                                ▼
                      ╭─────────────────╮
                      │       End        │
                      ╰─────────────────╯
```

FIG. 2

Start

A third device receives first measurement quantity results sent by at least two first devices — 301

The third device determines a positioning sensing result of the sensing target based on the first measurement quantity results sent by the at least two first devices — 302

End

FIG. 3

Base station

Static path

Dynamic path

UE 1

Sensing
target

Motion trajectory

Static path

$y$

$O$

$x$

UE 2

FIG. 4

Base station 1

Small base
station/
Dedicated
sensing
node

(UE) Sensing
sub-area 3

Sensing
target 2

Terminal
3

Terminal 4

(UE) Sensing sub-area 2

Sensing area

Base station 2

Sensing
target 3

Terminal 5

Terminal
2

Sensing
target 1

Terminal
1

(UE) Sensing sub-area 1

FIG. 5

FIG. 6

Base station

$(x_0, y_0)$

- - - -> Single-segment multipath
radial speed $V_{path\ 0,\ 1,\ 2}$

——> Single-segment multipath
tangential speed $V_{path\ 0,\ 1,\ 2}$

——> Target motion speed $V_{target}$

Sensing
target 1

$(x_1, y_1)$

$\varphi_1$

Terminal
1

$(x_2, y_2)$

$\varphi_2$

Terminal 2

$V_{path1}$

$V'_{path0}$

$V_{path2}$

$V_{path0}$

$V'_{path1}$

$V'_{path2}$ $V_{target}$

$(x_{target},\ y_{target})$

FIG. 7

Initiate a sensing requirement — 801

Determine base stations and UEs that participate in sensing — 802

Whether to initiate positioning for a part of UEs — Yes → UE positioning — 803

No

Determine base stations participating in sensing, and perform collaborative sensing UE grouping — 804

The base stations and the collaborative sensing UEs configure sensing-related parameters — 805

The collaborative sensing UEs and/or the base stations perform Doppler frequency measurement and reporting — 806

The collaborative sensing UEs and/or the base stations perform channel APS measurement and reporting — 807

The core network calculates a sensing result based on the measurement quantity result — 808

809 — Update the trajectory tracking results and provide feedback — Yes ← Whether to provide real-time feedback of additional results → No — Store trajectory tracking results

Whether a sensing service ends — No

Yes

Update the trajectory tracking results and provide feedback — 809

FIG. 8

900

First measurement module — 901

First sending module — 902

Target positioning sensing apparatus

FIG. 9

1000

First receiving module — 1001

First determining module — 1002

Target positioning sensing apparatus

FIG. 10

1100

Communication device

1101　Processor ⟷ Memory　1102

## FIG. 11

1200

1201　Radio frequency unit

Network module　1202

1210

Memory

1209　Application program

Operating system

Audio output unit　1203

1204

Input unit

Graphics processing unit　12041

Microphone　12042

1208　Interface unit

Processor

1207

User input unit

12071　Touch panel

12072　Another input device

1206

Display unit　12061

Display panel

Sensor　1205

## FIG. 12

1300

Communication device

1301

Processor

1303

Memory

Bus interface

Network interface

1302

FIG. 13

## INTERNATIONAL SEARCH REPORT

| International application No. |
|---|
| **PCT/CN2022/140653** |

**A.    CLASSIFICATION OF SUBJECT MATTER**

H04W 4/02(2018.01)i

According to International Patent Classification (IPC) or to both national classification and IPC

**B.    FIELDS SEARCHED**

Minimum documentation searched (classification system followed by classification symbols)

H04W,H04Q

Documentation searched other than minimum documentation to the extent that such documents are included in the fields searched

Electronic data base consulted during the international search (name of data base and, where practicable, search terms used)

CNPAT, CNKI, EPODOC, DWPI: 基站, 终端, 感知, 感测, 探测, 参考, 多普勒, 回波, 反射, 速度, 大小, 位置, 定位, 轨迹, 预测, 角度, 波束, 扫描, 长度, 频率, 频移, 协作, base, station, terminal, sensing, sounding, reference, Doppler, echo, reflection, velocity, size, position, location, prediction, angular, beam, sweep, length, frequency, shift, cooperation, ISAC, PRS, APS, AOA

**C.    DOCUMENTS CONSIDERED TO BE RELEVANT**

| Category* | Citation of document, with indication, where appropriate, of the relevant passages | Relevant to claim No. |
|---|---|---|
| X | US 7782247 B1 (ROCKWELL COLLINS, INC.) 24 August 2010 (2010-08-24) columns 3-9 | 1-39 |
| Y | CN 108287341 A (SPACE DEFENCE TECHNOLOGIES (SHENZHEN) CO., LTD.) 17 July 2018 (2018-07-17) description, paragraphs [0047]-[0112], and figures 1-6 | 1-39 |
| Y | CN 110888124 A (ZHOU YINGPING et al.) 17 March 2020 (2020-03-17) description, paragraphs [0053]-[0122] | 1-39 |
| A | CN 107678023 A (WUHU HUACHUANG PHOTOELECTRIC TECHNOLOGY CO., LTD.) 09 February 2018 (2018-02-09) entire document | 1-39 |
| A | US 2020341133 A1 (RICHWAVE TECHNOLOGY CORP.) 29 October 2020 (2020-10-29) entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2023** | **15 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140653**

| Patent document cited in search report | | | Publication date (day/month/year) | Patent family member(s) | | | Publication date (day/month/year) |
|---|---|---|---|---|---|---|---|
| US | 7782247 | B1 | 24 August 2010 | None | | | |
| CN | 108287341 | A | 17 July 2018 | None | | | |
| CN | 110888124 | A | 17 March 2020 | None | | | |
| CN | 107678023 | A | 09 February 2018 | None | | | |
| US | 2020341133 | A1 | 29 October 2020 | JP | 2020169989 | A | 15 October 2020 |
| | | | | KR | 20200116863 | A | 13 October 2020 |
| | | | | EP | 3719534 | A1 | 07 October 2020 |
| | | | | TW | 202037923 | A | 16 October 2020 |
| | | | | CN | 111796264 | A | 20 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111600044